# EUROPÄISCHE PATENTSCHRIFT

(11) **EP 2 307 647 B1**
(45) Veröffentlichungstag und Bekanntmachung des Hinweises auf die Patenterteilung: **20.05.2015**
(21) Anmeldenummer: 09749891.9
(22) Anmeldetag: 20.05.2009
(51) Int. Cl.: B60J 5/04, E05F 11/48

(54) **LAGERSTELLE FÜR EIN UMLENKELEMENT**
BEARING SITE FOR A REDIRECTING ELEMENT
POINT D'APPUI POUR UN ÉLÉMENT DE RENVOI

(30) Priorität: 21.05.2008 DE 102008024742
(43) Veröffentlichungstag der Anmeldung: 13.04.2011
(73) Patentinhaber: Brose Fahrzeugteile GmbH & Co. KG, Hallstadt, 96103 Hallstadt (DE)
(72) Erfinder: DESCHNER, Klaus, 96154 Burgwindheim (DE)
(74) Vertreter: Baumgärtel, Gunnar
(86) Internationale Anmeldenummer: PCT/EP2009/056182
(87) Internationale Veröffentlichungsnummer: WO 2009/141401

(56) Entgegenhaltungen:
- WO-A-2004/087450
- WO-A-2007/142128
- DE-U1- 20 213 813
- DE-U1-202006 018 071
- JP-A- 8 004 412

## Beschreibung

Die Erfindung betrifft eine Fensterheberbaugruppe mit einer Lagerstelle für ein Umlenkelement, insbesondere für eine Seilrolle oder ein Umlenkstück, welche Lagerstelle an einem Bauteil der Fensterheberbaugruppe eines Kraftfahrzeugs vorgesehen ist, nach dem Oberbegriff des Anspruches 1.

Umlenkelemente, wie beispielsweise Seilrollen oder Umlenkstücke bzw. Umlenkgleiter, werden an Bauteilen einer Fensterheberbaugruppe regelmäßig verwendet, um eine Antriebskraft zum Verstellen einer Fensterscheibe einer Kraftfahrzeugtür umzulenken. Dabei werden üblicherweise Seilzüge eingesetzt und umgelenkt. Diese übertragen die Antriebskraft von einem Antrieb auf die Fensterscheibe bzw. auf mit ihr verbundene Mitnehmer, um die Fensterscheibe innerhalb der Kraftfahrzeugtür anzuheben oder abzusenken. Bevorzugt erfolgt die Umlenkung mittels an Führungsschienen der Fensterscheibe vorgesehenen Seilrollen, die um eine Drehachse drehbar an den Führungsschienen befestigt sind. Für die drehbare Befestigung kommen verschiedene Befestigungselemente, wie z.B. Schrauben oder Stufenbolzen, zum Einsatz, die mittig durch die Seilrolle geführt sind und um deren Mittelachse die Seilrolle gedreht werden kann. Alternativ werden regelmäßig Umlenkstücke verwendet, durch die hindurch oder über die ein Seilzug geführt ist.

Infolge der auf die Seilrolle bzw. das Umlenkstück wirkenden relativ großen Kräfte, z.B. einem Biegemoment infolge der Antriebskräfte oder infolge einer Bewegung der Fensterscheibe, müssen diese von dem Befestigungselement sicher aufgenommen und in die Führungsschiene oder einen damit verbundenen Aggregateträger einer Kraftfahrzeugtür eingeleitet werden können. Üblicherweise werden daher zum einen die Befestigungselemente entsprechend stabil ausgelegt und zum anderen eine entsprechend verstärkte Aufnahme bzw. Befestigungsstelle für das Befestigungselement an der Führungsschiene bzw. dem Aggregateträger vorgesehen.

Damit einhergehende große Durchmesser für die Aufnahme bzw. die Befestigungsstelle, um die gewünschten respektive notwendigen Festigkeiten zu erzielen, sind jedoch materialaufwendig. Dies bedeutet gerade bei einer erhöhten Biegebelastung der Seilrolle senkrecht zu ihrer Drehachse, dass nur durch die Verwendung äußerst stabiler Befestigungselemente und durch entsprechende Materialdicken im Bereich des Befestigungselementes eine dauerhafte versagensfreie Funktion gewährleistet werden kann. Damit sind aber auch gleichzeitig erhöhte Kosten für die Herstellung und Montage einer solchen Fensterheberbaugruppe mit einem Umlenkelement verbunden.

Eine gattungsgemäße Fensterheberbaugruppe ist beispielsweise aus der WO 2004/087450 A1 bekannt. Hierin ist offenbart ein separat an die Lagerstelle montierbares Basiselement in Form eines Halteteils zu verwenden, um eine Seilrolle an einem Modulträger einer Fensterheberbaugruppe zu lagern. Das Basiselement ist U-förmig ausgestaltet, wobei seine zwei die U-Form definierenden Schenkel zueinander verlagerbar sind, um zwischen sich die Seilrolle aufnehmen und an Einbuchtungen der Schenkeln drehbar lagern zu können. Das Basiselement ist mit daran angebrachter Seilrolle entlang einer Anbringungsrichtung in eine taschenförmige Lagerstelle des Modulträgers einzusetzen, so dass eine Drehachse der Seilrolle senkrecht zu ihrer Anbringungsrichtung verläuft und sich die Seilrolle über das Basiselement in Anbringungsrichtung an einem Abschnitt der taschenförmigen Lagerstelle abstützt.

Aus der WO 2007/142128 A1 ist ferner eine Fensterheberbaugruppe bekannt, bei der eine Seilrolle in einem Basiselement untergebracht und hierüber an einem Bauteil der Fensterheberbaugruppe befestigt ist. Die Seilrolle stützt sich in einem montierten Zustand über das Basiselement an dem Bauteil nur entlang einer Verbindungsachse ab, entlang der die Anbringung der Seilrolle an dem Bauteil erfolgt und um die die Seilrolle drehbar ist.

Des Weiteren offenbart die JP 08-004412 A eine Fensterheberbaugruppe, bei der eine drehbar zu lagernde Seilrolle in eine taschenförmige Lagerstelle einer Führungsschiene der Fensterheberbaugruppe eingesetzt ist.

Der Erfindung liegt das Problem zugrunde, eine Fensterheberbaugruppe mit einer Lagerstelle für ein Umlenkelement bereitzustellen, die die zuvor genannten Nachteile überwindet oder zumindest minimiert und die Anbringung eines Umlenkelementes an einem Bauteil einer Fensterheberbaugruppe verbessert.

Dieses Problem wird erfindungsgemäß mit den Merkmalen des Anspruchs 1 gelöst.

Danach ist eine Fensterheberbaugruppe mit einer Lagerstelle für ein Umlenkelement, insbesondere für eine Seilrolle oder ein Umlenkstück, an einem Bauteil einer Fensterheberbaugruppe eines Kraftfahrzeugs vorgesehen, wobei das Umlenkelement an der Lagerstelle entlang einer von dem Umlenkelement zu dem Bauteil weisenden Verbindungsachse an dem Bauteil angeordnet ist und das Umlenkelement eine Antriebskraft zum Verstellen einer Fensterscheibe des Kraftfahrzeugs umlenkt. Erfindungsgemäß stützt die Lagerstelle das Umlenkelement an einer das Umlenkelement berandenden Außenseite zumindest in eine Richtung senkrecht zu der Verbindungsachse ab.

Dies bedeutet z.B. im Fall einer Verwendung einer Seilrolle als Umlenkelement, dass die Seilrolle an wenigstens einem Bereich ihres Umfangs radial von der Lagerstelle abgestützt wird. Falls ein zusätzliches Befestigungselement, wie beispielsweise eine Schraube, eine Niete oder ein Bolzen, zur Befestigung des Umlenkelementes vorgesehen wird, kann dieses ausschließlich zur Arretierung in Richtung der Verbindungsachse genutzt werden. Die Lagerung respektive Abstützung des Umlenkelementes, um die Kräfte aufzunehmen, die durch die Umlenkung der Antriebskraft auf das Umlenkelement wirken, können direkt über die Lagerstelle aufgenommen werden. Dementsprechend muss eine etwaige Befestigungsstelle für ein Befestigungselement an dem Bauteil nur für geringe Kräfte ausgelegt werden. Mit anderen Worten die an einem umfangsseitigen Bereich des Umlenkelementes vorgesehene Lagerstelle kann im Wesentlichen das Umlenkelement alleine abstützen und es wird gegebenenfalls nur eine zusätzliche Arretierung in Richtung der Verbindungsachse getrennt davon realisiert.

Die Verbindungsachse bezeichnet im Folgenden aber nicht notwendigerweise die Achse eines Verbindungs- oder Befestigungselementes für die Anbringung des Umlenkelementes an dem Bauteil. Mit der Verbindungsachse wird vielmehr grundsätzlich die Anbringungsrichtung des Umlenkelementes in oder an der Lagerstelle relativ zu dem Bauteil gezeichnet. Je nach verwendetem Umlenkelement wird auch eine "Abstützung" bzw. Anlage des Umlenkelements an dem Bauteil in Richtung der Verbindungsachse vorgesehen sein. Die erfindungsgemäße Lagerstelle stellt jedoch darüber hinaus eine Abstützung senkrecht zu dieser Verbindungsachse bereit.

Für die erfindungsgemäße Lagerstelle ist es daher unerheblich ob die nach der Montage einander zugewandten Flächen des Umlenkelementes und des Bauteils entlang der Verbindungsachse parallel zu einander liegen, wesentlich ist die Abstützung an wenigstens einer Außenseite des Umlenkelementes senkrecht zu der Verbindungsachse.

Dabei ist ein weiterer wesentlicher Aspekt der vorliegenden Erfindung die Verwendung eines separat an die Lagerstelle montierbaren Basiselementes, das mit wenigstens einem Abschnitt zwischen dem Umlenkelement und der senkrecht zu der Verbindungsachse vorgesehenen Abstützung der Lagerstelle angeordnet ist. Ein Abschnitt des Basiselements befindet sich folglich erfindungsgemäß zwischen dem Umlenkelement und einem von dem Bauteil vorstehenden (Stütz-) Abschnitt der Lagerstelle. Erfindungsgemäß stützt sich das Umlenkelement hierbei über das Basiselement an der Lagerstelle senkrecht zur Verbindungsachse ab.

Zur einfachen und sicheren Abstützung des Umlenkelementes weist die Lagerstelle folglich wenigstens einen von dem Bauteil vorstehenden Stützabschnitt auf, an dem oder über den das Umlenkelement abgestützt ist. Bei der Abstützung eines Umlenkelementes durch die Lagerstelle in mehrere Raumrichtungen kann auch eine Mehrzahl von vorstehenden Stützabschnitten oder ein durchgehender das Umlenkelement umgebender Stützabschnitt vorgesehen sein.

Ein vorstehender Stützabschnitt der Lagerstelle kann jeweils als von dem Bauteil (z.B. senkrecht) vorstehender Stift ausgebildet sein, an dem das Umlenkelement jeweils nur punktuell abgestützt ist. Es wird jedoch bevorzugt, dass die Lagerstelle wenigstens eine Anlagefläche an dem wenigstens einen vorstehenden Stützabschnitt ausbildet, an der das Umlenkelement abgestützt ist. Auf diese Weise wird eine optimierte Krafteinleitung von dem Umlenkelement auf die abstützende Lagerstelle möglich.

Im Zusammenhang mit der Verwendung eines Basiselementes und einer Seilrolle als Umlenkelement ist es daher ebenso denkbar, dass nur Abschnitte des Basiselementes direkt an einem zuvor genannten Stützabschnitten bzw. der Anlagefläche anliegen. Die Abstützung erfolgt dann radial mittels des Basiselementes in Kombination mit den Stützabschnitten der Lagerstelle.

So stellt das Basiselement, z.B. eine Fassung oder eine Buchse, zunächst eine Abstützung und/oder Lagerung des Umlenkelements bereit und stützt sich dann selbst an der Lagerstelle ab. Auf diese Weise kann auch eine Sandwichbauweise realisiert werden, wenn vorteilhafterweise das Basiselement und das Umlenkelement verschiedene Werkstoffeigenschaften aufweisen und dann kombiniert werden.

Zudem kann das Umlenkelement mit dem Basiselement vormontiert an dem Bauteil der Fensterheberbaugruppe angebracht werden. Besonders im Hinblick auf eine Seilrolle als drehbares Umlenkelement wird der Verwendung eines Basiselementes des Weiteren der Vorteil zugeschrieben, dass sowohl eine radiale als auch axiale Lagerung durch das Basiselement bereitgestellt werden kann. Das Basiselement kann also z.B. einen Dreh- oder Lagerzapfen ausbilden, auf den eine Seilrolle aufgesteckt wird und der so bearbeitet ist, dass eine möglichst reibungsfreie Drehung der Seilrolle möglich ist. Eine separate und aufwendige Bearbeitung bzw. Einstellung von Führungs- oder Kontaktflächen an dem Bauteil der Fensterheberbaugruppe selbst, z.B. an einem vorstehenden Stützabschnitt der Lagerstelle oder einer Befestigungsstelle, ist somit nicht notwendig.

Für eine optimierte Aufnahme bzw. Abstützung des Umlenkelementes in oder an der Lagerstelle wird es vorteilhaft erachtet, dass die Lagerstelle das Umlenkelement an sich gegenüberliegenden Bereichen des Umlenkelementes abstützt. Folglich wird es bevorzugt, wenn die Lagerstelle das Umlenkelement in mehrere Richtungen abstützt und somit auch auf eine Mehrzahl an Belastungsfällen oder unterschiedlichen auf das Umlenkelement wirkenden Kräften ausgelegt ist. Hierfür kann eine Abstützung an sich gegenüberliegenden Bereichen durch wenigstens zwei sich gegenüberliegende, vorstehende Stützabschnitte der Lagerstelle vorgesehen sein.

Bevorzugt wird weiterhin, dass die Lagerstelle das Umlenkelement wenigstens in eine Wirkrichtung der Antriebskraft abstützt, von der oder in die das Umlenkelement die Antriebskraft umlenkt. Diesbezüglich wäre also bei einer Seilrolle als Umlenkelement mit einem zur Übertragung der Antriebskraft eingesetzten Seilzug eine radiale Abstützung der Seilrolle jeweils in Richtung des Seiles bzw. Seilzuges vorgesehen.

Alternativ oder ergänzend stützt die Lagerstelle das Umlenkelement wenigstens in eine Richtung ab, in die infolge Umlenkung der Antriebskraft eine resultierende Kraft auf das Umlenkelement wirkt. Idealerweise wirkt die Antriebskraft bei einer Seilrolle oder einem Umlenkstück einer Fensterheberbaugruppe nur in einer Ebene, z.B. senkrecht zu einer Drehachse der Seilrolle. In wenigstens eine Richtung, in die eine dieser Kraftkomponenten wirkt, wird das Umlenkelement von der Lagerstelle vorteilhafterweise abgestützt. Falls die Umlenkung der Antriebskraft des Weiteren um einen Winkel kleiner als 90 Grad erfolgt, gibt es stets eine resultierende Kraft, die sowohl bei einer Umlenkung von der ersten in die zweite Wirkrichtung als auch bei einer Umlenkung von der zweiten in die erste Wirkrichtung in eine übereinstimmende Richtung weist. In diese Richtung wird dann eine Abstützung durch die Lagerstelle bevorzugt. Dies kann beispielsweise die Richtung der Längserstreckung einer Führungsschiene sein, an der das Umlenkelement angebracht ist.

Um z.B. eine Passung für ein Umlenkelement, insbesondere ein unbewegliches Umlenkstück, oder einen verbesserten Schutz des Umlenkelementes in oder an der Lagerstelle bereitzustellen, kann diese als eine Aufnahme ausgebildet sein, die das Umlenkelement wenigstens abschnittsweise umgibt. Auch kann eine vollständige Ummantelung realisiert werden, in die das Umlenkelement für die Anbringung an dem Bauteil, beispielsweise entlang der Verbindungsachse, eingeführt wird. Es ist jedoch dann nicht zwingend, dass sich das Umlenkelement an allen sie umgebenden Flächen der Aufnahme abstützt. Vielmehr können an einzelnen Stellen der Aufnahme ein oder mehrere Stützabschnitte vorgesehen sein.

In einer weiteren Ausgestaltungsvariante kann die Lagerstelle derart ausgebildet sein dass das Umlenkelement mittels einer Klemmverbindung in der Lagerstelle gehalten wird. Hierfür können z.B. federnde Rastelemente verwendet werden, die in das Umlenkelement eingreifen oder es umgreifen, nachdem das Umlenkelement an dem Bauteil der Fensterbaugruppe angebracht wurde. Bei einer Seilrolle könnte diese Klemmverbindung somit alternativ oder ergänzend eine Arretierung parallel zur Drehachse bereitstellen. Das heißt, dass die Seilrolle hierüber axial arretiert werden könnte.

In diesem Zusammenhang wird es daher auch als vorteilhaft erachtet, wenn die Anlagefläche und/oder der wenigstens eine vorstehende Stützabschnitt einer Kontur eines Bereichs folgt, der Teil der Außenseite des Umlenkelements ist. Die Anlagefläche bzw. der vorstehende Stützabschnitt ist also an den Verlauf bzw. die Form der entsprechenden Außenseite angepasst und beispielsweise gewölbt.

Um die in eine Anlagefläche der Lagerstelle eingeleitete Kraft effizienter an das Bauteil weitergegeben zu können, wird es bevorzugt, dass die Lagerstelle eine Stützstruktur aufweist. Diese Stützstruktur schließt sich an die Anlagefläche oder den wenigstens einen vorstehenden Abschnitt an und erstreckt sich in eine Richtung, die von dem Umlenkelement weg weist. Hierfür kann die Stützstruktur mit der Anlagefläche oder dem wenigstens einen vorstehenden Abschnitt einstückig ausgeformt oder davon separat gefertigt sein. Wesentlich ist, dass die Stützstruktur die mindestens eine Kraft aufnimmt, die infolge der Umlenkung der Antriebskraft von dem Umlenkelement auf die Anlagefläche oder den vorstehenden Abschnitt wirkt. Für eine hinsichtlich des Kraftflusses optimierte Stützstruktur wird es in einer Weiterbildung als besonders vorteilhaft erachtet, wenn die Stützstruktur von der Anlagefläche aus konisch zuläuft.

In einer Variante wird die Lagerstelle in vorteilhafter Weise so ausgeführt, dass die Lagerstelle das Umlenkelement und/oder das Basiselement derart abstützt, dass die Lagerstelle ein Verkippen des Umlenkelements und/oder des Basiselementes in eine Richtung parallel zur Verbindungsachse begrenzt oder verhindert. Es wird mit anderen Worten z.B. durch einen das Umlenkelement umgreifenden vorstehenden Stützabschnitt gewährleistet, dass das Umlenkelement relativ zu dem Bauteil nicht verkippt oder nur um einen definierten Betrag verkippt werden kann, nachdem es an dem Bauteil montiert wurde. Die Lagerstelle weist folglich eine Verkippsicherung für das Umlenkelement und/oder das Basiselement auf.

Hierfür kann ein umgreifender Stützabschnitt gegebenenfalls auch mit einer Anschlagfläche versehen sein, mittels derer das Umlenkelement und/oder das Basiselement am Verkippen verhindert wird. Ebenso können das Basiselement oder das Umlenkelement allein oder das Basiselement und das Umlenkelement zusammen erst nach einem tolerierbaren Verkippen an der Anlagefläche anliegen und an einem weiteren Verkippen gehindert werden. Tolerierbar kann ein solches Verkippen beispielsweise sein, wenn die Funktionserfüllung des Umlenkelementes weiterhin gegeben ist. Dies kann z.B. der Fall sein, wenn trotz eines Verkippens um einen tolerierbaren Betrag eine definierte und reibungsarme bzw. geräuscharme Drehung einer Seilrolle als Umlenkelement möglich ist, die über das Basiselement in der Lagerstelle angebracht ist.

In Übereinstimmung mit der zuvor dargestellten Verkippsicherung der Lagerstelle ist es selbstverständlich auch möglich, dass das Basiselement eine solche Verkippsicherung aufweist. Die Verkippsicherung verhindert analog, dass das Umlenkelement in Bezug auf das Basiselement durch eine senkrecht zur Antriebskraft wirkende Kraftkomponente verkippt wird.

In diesem Fall, wie auch bei der zuvor dargestellten Anschlagfläche des vorstehenden Abschnitts der Lagerstelle ist bei einem drehbar gelagerten Umlenkelement, wie z.B. einer Seilrolle, darauf zu achten, dass die Verkippsicherung nicht die Laufruhe des Umlenkelements beeinträchtigt. Dafür kann z.B. eine Schmierung zwischen Anschlagfläche und Umlenkelement vorgesehen sein. Besonders bevorzugt wird es jedoch, wenn ein drehbares Umlenkelement mit dem Basiselement verbunden ist und nur das Basiselement am (weiteren) Verkippen gehindert wird. Für ein starres Umlenkelement, wie z.B. einen so genannten Umlenkgleiter, durch den oder über den ein Seilzug zur Umlenkung gleitend geführt ist, können dagegen die erläuterten Verkippsicherungen direkt an dem Umlenkelement angreifen bzw. anliegen.

Wie bereits oben erwähnt, wird es als besonders vorteilhaft erachtet, wenn das Basiselement aus einem anderen Material als die Lagerstelle gefertigt ist. Da wesentliche Elemente einer Fensterheberbaugruppe, wie ein Aggregateträger oder die Führungsschienen, üblicherweise aus Kunststoff gefertigt werden, wird entsprechend ein Basiselement aus Metall, z.B. eine Stahlbundbuchse, bevorzugt.

Weiterhin kann in Anlehnung an die obigen Ausführungen bezüglich einer direkten Klemmverbindung zwischen Umlenkelement und Lagerstelle bzw. dem vorstehendem Stützabschnitt der Lagerstelle natürlich auch eine solche oder ähnliche Klemmverbindung zwischen einem Basiselement und der Lagerstelle realisiert werden. Damit wird die Montage weiter vereinfacht.

In einer als besonders vorteilhaft erachteten Ausgestaltungsvariante der Erfindung mit einem Basiselement weist das Basiselement eine Verdrehsicherung auf. Mittels der Verdrehsicherung wird bei einem zur Umlenkung der Antriebskraft drehbar gelagertem Umlenkelement verhindert, dass das Basiselement bei einer Drehung des Umlenkelementes mitbewegt wird.

Beispielsweise kann das Basiselement als Verdrehsicherung einen angeformten Steg aufweisen, der sich im Wesentlichen senkrecht zu einer Drehachse des Umlenkelementes an dem Basiselement erstreckt und der im Bereich der Lagerstelle fixiert ist. Auf diese Weise kann beispielsweise eine einfache und schnelle Anbringung einer vormontierten Baugruppe aus Seilrolle und Basiselement realisiert werden und gleichzeitig sichergestellt werden, dass sich das Basiselement nicht zusammen mit der Seilrolle verdreht. Eine solche gemeinsame Verdrehung ist dabei mit Blick auf eine erhöhte Reibung, eine unerwünschte Geräuschentwicklung oder sogar eine entscheidende Funktionsbeeinträchtigung zu vermeiden.

In einer Kombination mit einer der zuvor genannten Ausgestaltungsvarianten ist der Steg vorzugsweise in einer Aussparung der Stützstruktur formschlüssig aufgenommen.

Um die Funktionssicherheit mit der erfindungsgemäßen Lagerstelle weiter zu erhöhen, sind die Lagerstelle und/oder das Basiselement bevorzugt derart ausgebildet, dass die Lagerstelle und/oder das Basiselement verhindern, dass ein Seilzug nach der Montage der Fensterheberbaugruppe durch eine senkrecht zur Antriebskraft wirkende Kraftkomponente von einer Seilrolle als Umlenkelement entfernt wird. Diese "Seilsicherung" kann alternativ natürlich auch für ein Umlenkstück vorgesehen sein, über deren Außenseite ein Seilzug, z.B. in einer Nut, gleitend geführt ist.

Hierfür können die Lagerstelle selbst und/oder das Basiselement eine an einer Seilrolle umlaufende Nut zur Führung des Seilzugs in einem Abstand überdecken, der die Dicke des Seils nicht übersteigt, und/oder einen sich radial zu der Seilrolle erstreckenden Vorsprung aufweisen, der eine Bewegung des Seilzuges parallel zur Drehachse der Seilrolle begrenzt.

Vorzugsweise wird der wenigstens eine vorstehende Stützabschnitt oder einer der vorstehenden Stützabschnitte der Lagerstelle als Seilsicherungslasche ausgebildet, die die umlaufende Nut der Seilrolle überdeckt.

Weiterhin wird die Lagerstelle in einer Ausgestaltungsvariante so erweitert, sie eine Seilzugabstützung aufweist, die zur definierten Führung eines Seilzuges zu dem Umlenkelement hin bzw. von dem Umlenkelement weg ausgebildet ist. mit anderen Worten die Lagerstelle weist in dieser Variante eine Seilzugabstützung auf, die den Seilzug zu dem Umlenkelement hin oder von dem Umlenkelement weg führt. Beispielsweise ist hierzu wenigstens ein Steg oder eine Leiste an der Lagerstelle oder einem vorstehenden Stützabschnitt der Lagerstelle angeformt.

Alternativ wird bei einer separat montierbaren Seilzugabstützung die Lagerstelle vorzugsweise so gestaltet, dass die Seilzugabstützung an einem dafür vorgesehenen Bereich der Lagerstelle aufsteckbar ist.

Um über die Lagerstelle die relativ hohen Kräfte z.B. bei einer Verstellung der Fensterscheibe aufnehmen zu können und dennoch den vorstehenden Stützabschnitt selbst nicht allzu massiv ausgestalten zu müssen, sind in einer Weiterbildung der Erfindung Verstärkungsrippen an der Lagerstelle vorgesehen.

Diese Verstärkungsrippen sind dann bevorzugt an wenigstens einem der vorstehenden Stützabschnitte angeformt und/oder erstrecken sich in eine Wirkrichtung der Antriebskraft. Vorteilhafterweise ist eine Mehrzahl von Verstärkungsrippen vorgesehen.

Ergänzend weisen dann die einzelnen Verstärkungsrippen unterschiedliche Längen auf, wobei sich die Längen nach den Kräften richten, die infolge der Umlenkung der Antriebskraft von dem Umlenkelement auf die Verstärkungsrippen wirken. Mit anderen Worten eine Verstärkungsrippe ist länger und damit besser für die Kraftableitung ausgebildet, wenn üblicherweise eine größere Kraft auf sie wirkt.

Zwar kann die erfindungsgemäße Lagerstelle in den bisher dargestellten Ausführungsvarianten stets auch als separates Bauelement der Fensterheberbaugruppe ausgebildet sein, sie ist aber vorzugsweise an einem Aggregateträger oder einer Führungsscheine der Fensterheberbaugruppe angeformt, um Kosten und Aufwand zu minimieren.

Eine Führungsschiene einer Fensterheberbaugruppe eines Kraftfahrzeugs weist regelmäßig eine Laufbahn auf, entlang derer ein Mitnehmer verschiebbar ist, um eine mit dem Mitnehmer verbundene Fensterscheibe zu verstellen. Bei einer erfindungsgemäßen Lagerstelle, die an einer solchen Führungsschiene vorgesehen ist, wird es bei einer sich an eine Anlagefläche oder einen vorstehenden Stützabschnitt der Lagerstelle anschließenden Stützstruktur bevorzugt, dass die Stützstruktur Teil der Laufbahn ist. Auf dieser Weise ist eine verbesserte Bauraumnutzung und Funktionsintegration möglich.

Um die Bauteilintegration einer Fensterheberbaugruppe weiter zu steigern, wird eine Ausführungsform als besonders vorteilhaft erachtet, bei der eine Führungsschiene eine erfindungsgemäße Lagerstelle aufweist und an einem Aggregateträger integriert ist. Mit anderen Worten die entsprechende Führungsschiene ist mit der Lagerstelle an dem Aggregateträger (einstückig) angeformt respektive zusammen mit diesem ausgeformt. Hierbei lässt sich besonders im Rahmen einer Herstellung aus Kunststoff eine äußerst kostengünstige Fertigung realisieren. Die Anbringung des Umlenkelementes, z.B. eine Seilrolle oder ein Umlenkstück, erfolgt hier dann vorzugsweise zusammen mit dem beschriebenen Basiselement, z.B. einer Metallbuchse oder einer Metallfassung.

Weitere Merkmale und Vorteile der Erfindung werden bei der nachfolgenden Beschreibung von Ausführungsbeispielen anhand der Figuren deutlich werden.

Es zeigen:
- Fig. 1: eine Seitenansicht eines Aggregateträger eines Kraftfahrzeugtür mit zwei Führungsschienen;
- Fig. 2: eine Detailansicht eines unteren Endes einer Führungsschiene der Fig. 1;
- Fig. 3: eine Detailansicht eines oberen Endes der Führungsschiene der Fig. 2;
- Fig. 4: eine perspektivische Explosionszeichnung eines oberen Endes der zweiten Führungsschiene mit einer Lagerstelle, einem Basiselement, einer Seilrolle, einer Unterlegscheibe und einer Befestigungsschraube;
- Fig. 5A-B: perspektivische Explosionszeichnungen der Bauelemente der Fig. 4 ohne Führungsschiene;
- Fig. 6A-B: übereinstimmende perspektivische Ansichten der Bauelemente der Fig.5A-B im zusammengebauten Zustand;
- Fig.7: eine weitere Ausführungsform in perspektivischer Seitenansicht eines oberen Endes einer Führungsschiene;
- Fig. 8: eine geschnittene Draufsicht der Ausführungsform der Fig. 7;
- Fig. 9: eine Seitenansicht einer weiteren Ausführungsform ;
- Fig. 10: eine Einzeldarstellung einer Seilrolle mit einem Basiselement mit Verdrehsicherung in Seitenansicht.

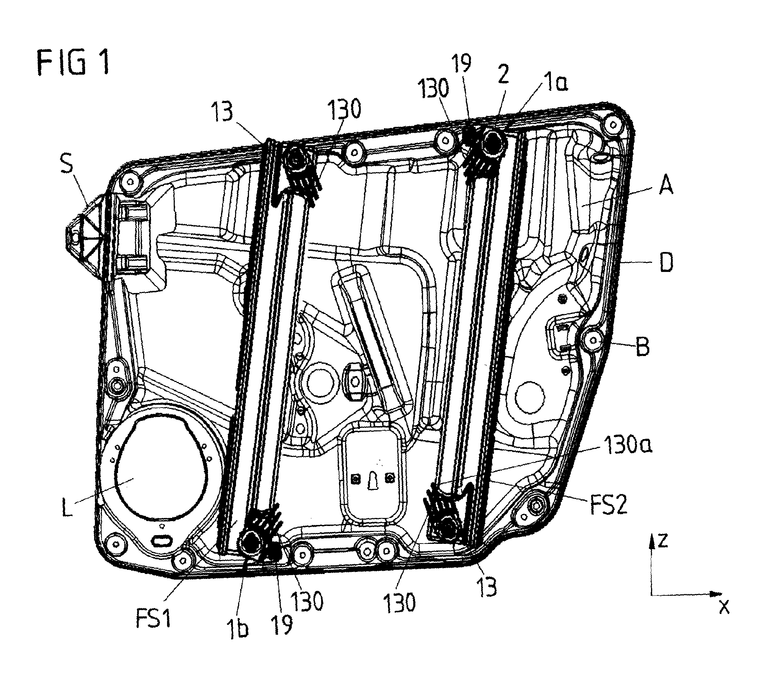

Die Fig. 1 zeigt in Seitenansicht einen flächigen Aggregateträger A einer Kraftfahrzeugtür, der zum einen als Bauteil einer Fensterheberbaugruppe fungiert und zum anderen zum Tragen weiterer Funktionskomponenten ausgebildet ist. Hierfür weist er beispielsweise einen seitlich angeformten Bereich S zu Anbindung eines Türschlosses oder eine Lautsprecheröffnung L auf. Der Aggregateträger A wird üblicherweise über im Bereich seines Umfangs angeordnete Befestigungsbohrungen B an der Kraftfahrzeugtür angebracht. Eine den Aggregateträger A an seinem seitlichen Rand umlaufende Dichtung D gewährleistet nach seiner Anbringung an eine Kraftfahrzeugtür eine abgedichtete Verbindung.

Der gezeigte Aggregateträger A weist weiterhin zwei parallel zu einander orientierte Führungsschienen FS1, FS2 auf. Die Führungsscheinen FS1, FS2 erstrecken sich an dem Aggregateträger A von einem unteren Ende zu einem oberen Ende leicht geneigt zur Vertikalen Z, sind also im eingebauten Zustand leicht geneigt zu einer von der Fahrzeugunterseite zur Fahrzeugoberseite weisenden Fahrzeugachse. Die Führungsschienen FS1, FS2 erstrecken sich im Wesentlichen über die gesamte Breite des flächigen Aggregateträgers A in Richtung der Vertikalen Z und sind voneinander und von den zur Vertikalen Z nahezu parallelen und den Aggregateträger A seitlich begrenzenden Rändern beabstandet.

Die Führungsschienen FS1, FS2 weisen an ihren Enden jeweils eine Seilrolle 2 auf, die als Umlenkelement für einen hier nicht dargestellten Seilzug dient. Über die Seilrollen 2 wird eine über den Seilzug übertragende Antriebskraft von einem Antrieb auf eine Fensterscheibe umgelenkt. Dadurch ist dann die Fensterscheibe innerhalb der Kraftfahrzeugtür mittels des Antriebs zu verstellen, also anzuheben und abzusenken.

Die vier Seilrollen 2, als drehbar gelagerte Umlenkelemente, sind an den Enden der Führungsschienen FS1, FS2 jeweils in einer Lagerstelle 1 a, 1 b angeordnet und radial abgestützt. Die Seilrollen 2 sind also entlang einer von der Seilrolle 2 zu dem Aggregateträger A bzw. der Führungsschienen FS1, FS2 weisenden Verbindungsachse Y angeordnet. Mit anderen Worten die Anbringung der Seilrollen 2 erfolgt entlang ihrer Drehachse senkrecht zur dem sich im Wesentlichen in der XZ-Ebene erstreckenden flächigen Aggregateträger A. Dabei erfolgt eine Abstützung der Seilrolle 2 im vorliegenden Fall jeweils durch einen von der Führungsschiene FS1, FS2 vorstehenden Stützabschnitt 13 an einem Bereich 23 am Umfang der Seilrollen 2. Der Stützabschnitt 13 stützt die Seilrollen 2 daher radial im Wesentlichen in Richtung einer Diagonalen ab, die jeweils von einer Seilrolle 2 einer Führungsschiene FS1, FS2 zu der diametral gegenüberliegenden Seilrolle 2 der anderen Führungsschiene FS2, FS1 weist.

An dem Stützabschnitt 13 sind zur verbesserten Kraftaufnahme der auf die Seilrolle 2 wirkenden Verstellkräfte Verstärkungsrippen 130 angeformt. Diese erstrecken sich parallel und jeweils beabstandet voneinander ebenso in Richtung der diametral gegenüberliegenden Seilrolle 2 der benachbarten Führungsschiene FS1, FS2. Da der Seilzug üblicherweise überkreuz geführt wird und daher z.B. von einem oberen Ende der einen Führungsschiene FS1 zu einem unteren Ende der anderen Führungsschiene FS2 geführt wird, wirken in diese Richtung auch die größten Kräfte bei einer Verstellung der Fensterscheibe.

Um unnötigen Materialaufwand zu verhindern, sind die einzelnen Verstärkungsrippen 130 unterschiedlich lang gestaltet. Eine zentrale Verstärkungsrippe 130a, an die sich die weiteren Verstärkungsrippen 130 (symmetrisch) anschließen, erstreckt sich entlang einer Geraden, die die Mittelpunkte der sich diametral gegenüberliegenden Seilrollen 2 verbindet, und weist die größte Länge auf. Hier werden jeweils die größten Kräfte von einer Seilrolle 2 auf einen vorstehenden Stützabschnitt 13 der Lagerstelle 1 übertragen. Die weiteren Verstärkungsrippen 130, die sich zu beiden Seiten der zentralen Verstärkungsrippe 130a anschließen, sind dementsprechend kürzer ausgeführt und richten sich nach der aufzunehmenden bzw. auf sie wirkenden Kraft.

Des Weiteren ist in der Fig. 1 bereits zu erkennen, dass wenigstens zwei der Lagerstellen 1 a, 1 b eine Bowdenzug- bzw. Seilzugabstützung 19 aufweisen. Die Seilzugabstützung 19 dient der definierten Führung des Seilzuges zu der Seilrolle 2 hin bzw. bei Umkehrung der Drehbewegung der Seilrolle 2 von der Seilrolle 2 weg. Hierfür weist die Seilzugabstützung 19 einen Kanal oder eine Nut auf, in der der Bowden- bzw. Seilzug geführt ist. Vorliegend ist jeweils eine Seilzugabstützung 19 an dem unteren Ende der ersten Führungsschiene FS1 und an einem oberen Ende der zweiten Führungsschiene FS2 angeordnet. Die Seilzugabstützung 19 respektive deren (Führungs-)Kanäle weisen hier jeweils in Richtung des gegenüberliegenden unteren Endes der Führungsschiene FS2 bzw. des gegenüberliegenden oberen Endes der Führungsschiene FS1. Da mittels der gezeigten Seilzugabstützung 19 eine optimierte Zuführung eines Seilzuges an die Seilrollen 2 gewährleistet werden soll, erstrecken sich diese entlang eines kleinen Abschnitts an der Lagerstelle 1 b, 1 a unterhalb des unteren Endes der Führungsschiene FS1 bzw. oberhalb des oberen Endes der Führungsschiene FS2.

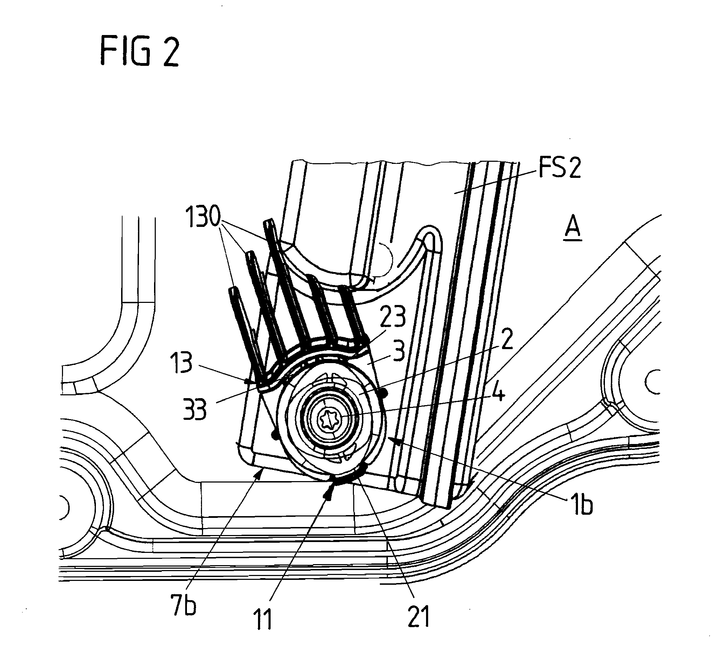

Mit der Detailansicht des unteren Endes der Führungsschiene FS2 in der Fig. 2 wird die angepasste Formgebung der (unteren) Lagerstelle 1 b verdeutlicht. Hier ist zu erkennen, dass der als Stützbereich für die Seilrolle 2 ausgebildete Stützabschnitt 13 der Lagerstelle 1 b im Wesentlichen senkrecht von der Führungsschiene FS2 absteht. Seine dem Umfang der Seilrolle 2 zugewandte (Anlage-)fläche folgt abschnittsweise der Kontur der Seilrolle 2 und ist daher in dem abstützenden Bereich gewölbt.

Weiterhin ist gegenüber dem Stützabschnitt 13 ein weiterer an der Führungsschiene FS2 angeformter Stützabschnitt 11 gezeigt. Der Stützabschnitt 11 kann die Seilrolle 2 an einem dem Stützabschnitt 13 gegenüberliegenden Bereich 21 ihres Umfangs abstützen, wenn z.B. der Bereich 21 der Seilrolle 2 an dem Stützabschnitt 11 anliegt. Um aber die Seilrolle 2 möglichst reibungsarm drehbar zu lagern, wird zur Übertragung der entsprechenden Kräfte senkrecht zur Dreh- bzw. Verbindungsachse Y ein Basiselement zwischen Seilrolle 2 und der Lagerstelle 1a, 1b angeordnet. Ein direkter Kontakt zwischen Seilrolle 2 und einem der Stützabschnitte 11, 13 ist daher nicht notwendig.

Der Stützabschnitt 11 wird im Folgenden zur besseren Unterscheidung auch als "äußerer Stützabschnitt" bezeichnet, da er näher an einer die Führungsschiene FS2 quer zu ihrer Erstreckungsrichtung begrenzenden Abschlusskante liegt. In der Fig. 2 ist dies die untere Abschlusskante 7b. Der Stützabschnitt 13 der Lagerstellen 1a, 1b wird dementsprechend auch als "innerer Stützabschnitt" bezeichnet werden.

Der äußere Stützabschnitt 11 erstreckt sich ebenso nahezu senkrecht von der Führungsschiene FS2 und ist als Seilsicherungslasche ausgeführt. Die bedeutet nach der Montage der Seilrolle 2 überdeckt der äußere Stützabschnitt 11 eine umlaufende Nut der Seilrolle 2, in der der Seilzug geführt ist. Auf diese Weise wird verhindert, dass der Seilzug nach der Montage aus der führenden Nut der Seilrolle 2 in radialer und/oder axialer Richtung ungewollt entfernt werden kann. So kann beispielsweise durch eine in Y-Richtung, also senkrecht zu einer Antriebskraft, wirkende Kraftkomponente auf das Seil verhindert werden, dass das Seil im Bereich der Lagerstellen 1 a, 1 b verrutscht, verklemmt oder sogar von der Seilrolle 2 gelöst wird.

Des Weiteren ist in der Fig. 2 ersichtlich, dass in diesem Ausführungsbeispiel das Basiselement 3 vorgesehen ist, das zwischen der Seilrolle 2 und der Lagerstelle 1 b bzw. der Führungsschiene FS2 angeordnet ist. Das Basiselement 3 weist eine Basisfläche 32 auf, die sich nahezu senkrecht zur Drehachse der Seilrolle 2 zwischen einer Unterseite der Seilrolle 2 und der Führungsschiene FS2 befindet. Weiterhin hat das Basiselement 3 einen davon senkrecht hervorstehenden Abschnitt 33, der sich zwischen dem inneren Stützabschnitt 13 und dem Bereich 21 der Seilrolle 2 befindet. Die Seilrolle 2 ist mit dem Basiselement 3 verbunden bzw. an diesem drehbar gelagert und stützt sich folglich über das Basiselement 3 an der Lagerstelle 1 b ab.

Da die Seilrolle 2 somit radial gelagert ist und die Kräfte in radialer Richtung von der Lagerstelle 1 b aufgenommen werden, ist eine entlang der Drehachse der Seilrolle 2 zusammen mit einer Unterlegscheibe 5 eingebrachte Schraube 4 nur noch zur axialen Sicherung der Seilrolle 2 an der Führungsschiene FS2 nötig. Zusätzlich könnte z.B. die Sicherungslasche, also der äußere Stützabschnitt 11, als federndes Rastelement ausgelegt werden, so dass die Seilrolle 2 oder auch ein alternatives Umlenkelement in der Lagerstelle 1 b über eine Klemmverbindung gehalten wird. Um jedoch bei einer drehbaren Seilrolle 2 eine stabilere axiale Sicherung bereitzustellen und die Reibung mittels einer axialen Sicherung über einen Bolzen oder eine Schraube 5 leichter minimiert werden kann, wird die gezeigte Ausgestaltungsvariante bevorzugt.

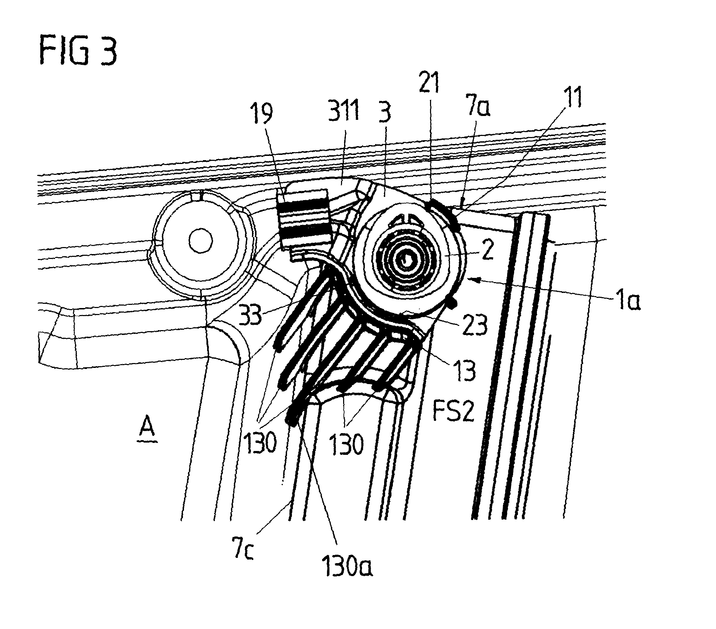

Mit der Fig. 3 wird das obere Ende der Führungsschiene FS2 aus Fig. 1 in vergrößerter Detailansicht gezeigt. Auch hier wird ein Basiselement 3, vorzugsweise aus Metall, verwendet, um eine Sandwichbauweise zu realisieren. Das Basiselement 3 ist mit seinem von der Führungsscheine FS2 vorstehenden Abschnitt 33 zwischen dem an die Führungsschiene FS2 angeformten inneren Stützabschnitt 13 der (oberen) Lagerstelle 1a und einem diesem Stützabschnitt 13 zugewandten Randbereich 23 der Seilrolle 2 angeordnet.

Im Gegensatz zu der unteren Lagerstelle 1 b weist das hier gezeigte Basiselement 3 einen sich über die die Führungsschiene FS2 berandenden Außenkanten 7a, 7c hinaus erstreckenden Fortsatz 311 auf. Dabei stellt die Außenkante 7c eine Berandung parallel zur Erstreckungsrichtung der Führungsschiene FS2 dar, während die Außenkante 7a quer zur Erstreckungsrichtung verläuft. An dem Bereich bzw. Fortsatz 311 ist eine Nut eingearbeitet, die das Aufstecken einer Seilzugabstützung 19 mit quadratischer Grundfläche gestattet. Die Seilzugabstützung 19 ist bezogen auf das Basiselement 3 kleiner gestaltet und übersteigt hier nicht den Durchmesser der Seilrolle 2. Die Seilzugabstützung kann daher als zusätzliches Element, ggf. aus einem flexiblen Kunststoff, ohne weiteres leicht angebracht und zusammen mit dem Basiselement 3 und der Seilrolle 2 vormontiert werden. Natürlich kann alternativ die Lagerstelle 1 a selbst den Fortsatz zur Bereitstellung der Seilzugabstützung 19 aufweisen und/oder die Seilzugabstützung 19 auch an der Führungsschiene FS2 oder dem Aggregateträger A angeformt sein oder.

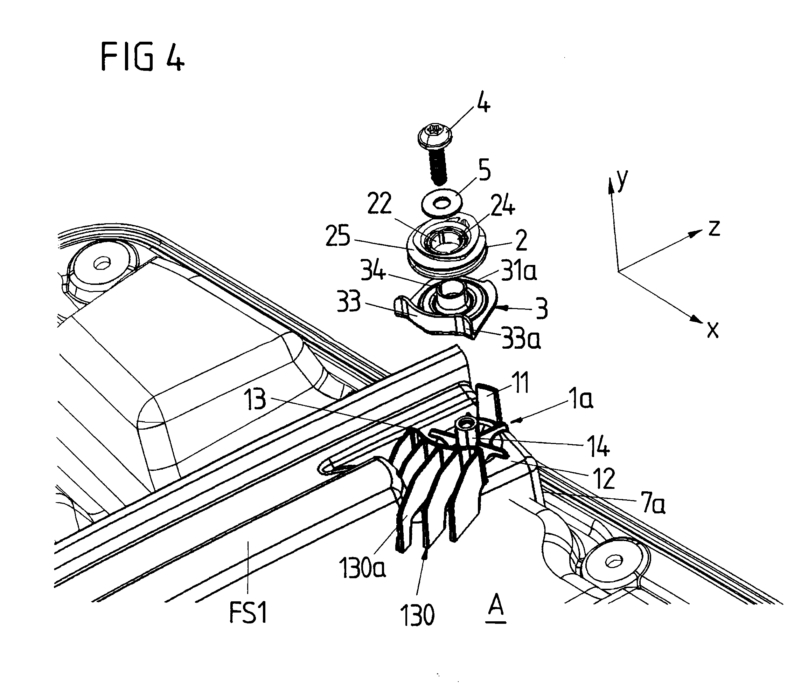

In der Explosionszeichnung der Fig. 4 sind die Elemente der Fensterheberbaugruppe einzeln erkennbar. Dafür wird die obere Lagerstelle 1a der Führungsschiene FS1 dargestellt, die hier an dem Aggregateträger A integriert also angeformt ist. Ebenfalls sind die senkrecht zur Führungsschiene FS1 bzw. parallel zu Verbindungsachse Y flächig ausgebildeten Verstärkungsrippen 130, 130a und eine Anlagefläche 12 der Lagerstelle 1 a gut zu erkennen. An der Anlagefläche 12 liegt nach der Montage das Basiselement 3 mit der Unterseite der Basisfläche 32 in Richtung der Führungsschiene FS1 (FS2) an.

In dieser Darstellung ist auch ersichtlich, dass die Lagerstelle 1a zentral einen vorstehenden hohlen Lager- bzw. Befestigungszapfen 14 aufweist. Über diesen kann ein Durchzug 34 am Basiselement 3 geführt werden, so dass eine vereinfachte und definierte Positionierung des Basiselementes 3 möglich ist. Der hülsenförmige Lagerzapfen 14 nimmt aufgrund der erfindungsgemäßen radialen Abstützung der Seilrolle 2 bzw. des Basiselementes 3 die radialen Kräfte auf die Seilrolle 2, wobei das Basiselement 3 dann radial an dem Stützabschnitten 11 und 13 der Lagerstelle 1a, 1b abgestützt ist. Damit der Lagerzapfen entsprechend dünnwandig ausgeführt sein kann, bietet sich die Fertigung des Basiselements aus einem formsteifen Metall an, während die Lagerstellen 1 a und 1 b aus Kunststoff gefertigt sein können.

Im Inneren des Lagerzapfens ist ein Innengewinde vorgesehen, so dass nach dem Überstülpen des kreisförmigen Durchzuges 34 das Basiselement 3 und die Seilrolle 2 mittels einer Unterlegscheibe 5 und einer Schraube 4 in einfacher und schneller Weise an der Führungsschiene FS1 axial gesichert angebracht werden können. Die Schraube 4 stellt dabei zusammen mit der Unterlegscheibe 5 nur eine axiale Sicherung bereit. Die Seilrolle 2 wird über die Innenfläche ihrer Bohrung 24 an der Außenfläche des Durchzugs 34 des Basiselementes 3 sowie über dessen Vorsprung bzw. vorstehenden Abschnitt 33 an dem inneren Stützabschnitt 13 der Lagerstelle 1a radial abgestützt. Über den Durchzug 34 des Basiselementes 3 ist die Seilrolle 2 somit drehbar gelagert.

Die Anbringung der Seilrolle 2 und des Basiselementes 3 an der Lagerstelle 1 a bzw. der Führungsschiene FS1 kann zusammen oder nacheinander erfolgen. Maßgeblich ist der modulare Aufbau der funktionellen Komponenten bestehend aus Seilrolle 2, Basiselement 3 und Lagerstelle 1 a.

Die Fig. 4 macht auch deutlich, wie mit dem gezeigten Ausführungsbeispiel in ansprechender Weise, das Mitdrehen des Basiselementes 3 zusammen mit der Seilrolle 2 verhindert wird. Hierzu weist das Basiselement 3 eine Aussparung bzw. Ausnehmung 31a auf die den äußeren Stützabschnitt 11 formschlüssig umgreift, wenn das Basiselement 3 in der vorgegebenen Weise in die Lagerstelle 1a eingeführt wurde. Zudem ist der gewölbte Abschnitt 33 des Basiselementes 3 beidseitig mit einem sich anschließenden Fortsatz 33a versehen, der einen Widerstand bei einer versuchten Drehbewegung des Basiselementes 3 bildet. Hierfür weist der Fortsatz 33a eine gegenüber Wölbung, die der Kontur der Seilrolle 2 folgt, entgegensetzte Wölbung auf, über die der Fortsatz 33a eine Passung mit dem äußeren Stützabschnitt 13 der Lagerstelle 1a herstellt und ein Mitdrehen des Basiselementes 3 zusätzlich verhindert. Anstelle einer entgegen gesetzten Wölbung ließe sich dies natürlich auch durch einen abknickenden oder allgemein radial zu der Seilrolle 2 verlaufenden Fortsatz 33a realisieren.

Falls die Lagerstelle 1a als eine Aufnahme ausgeführt ist, die die Seilrolle 2 wenigstens abschnittsweise umgibt, können selbstverständlich auch nicht zur Abstützung der Seilrolle 2 verwendete aber die Seilrolle 2 umgebende Bereiche für eine solche Sicherung des Basiselementes 3 genutzt werden.

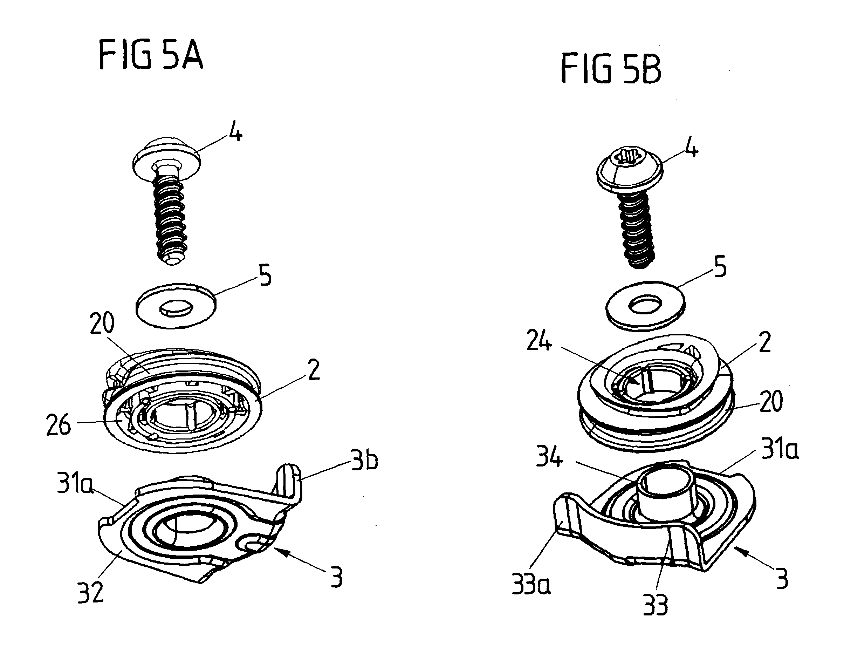

Mit den Fig. 5A und 5B werden nochmals in Einzelansichten das Basiselement 3, die Seilrolle 2 mit einer umlaufenden Nut 20 zur Führung eines Seilzuges, die Unterlegscheibe 5 und die Schraube 4 gezeigt, um deren Zusammenbau und deren Ineinandergreifen zu verdeutlichen.

So ist in der perspektivischen Ansicht der Fig. 5A eine an der Unterseite der Seilrolle 2 umlaufende Aussparung 26 zu erkennen. Die Unterseite der Seilrolle 2 ist der Basisfläche des Basiselementes 3 zugewandt, so dass in die Aussparung 26 ein umlaufender Ringwulst 36 des Basiselementes 3 hinragen kann. Darüber wird eine definierte Anlage der Seilrolle 2 an dem Basiselement 3 und eine Versteifung des Basiselementes 3 erzielt.

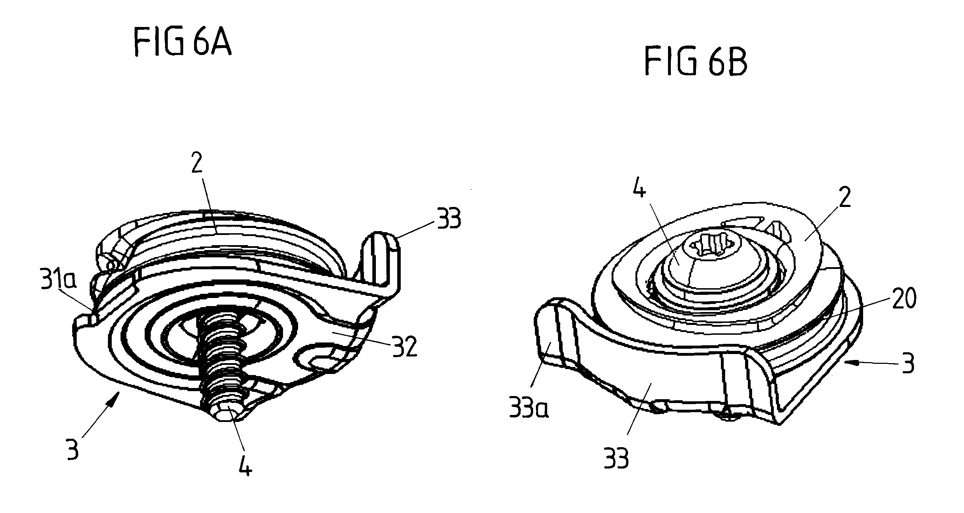

In den Fig. 6A und 6B ist eine zusammengebaute Konfiguration der Elemente aus den Fig. 5A und 5B in übereinstimmenden Ansichten gezeigt. Mit einer derart vormontierten Baugruppe bestehend aus Basiselement 3, Seilrolle 2 und durch beide hindurch gesteckte Schraube 4 ist eine schnelle und nahezu fehlerfreie Anbindung an die Führungsschiene FS1, FS2 bzw. den Aggregateträger A möglich. Zusammen mit der entsprechenden Lagerstelle 1a, 1b ist eine stabile umfangseitige Abstützung der Seilrolle 2 gegeben, ohne dass ein massiv ausgelegter Lagerzapfen die Seilrolle 2 abstützen und die auf die Schraube 4 wirkenden Biegemomente aufnehmen müsste.

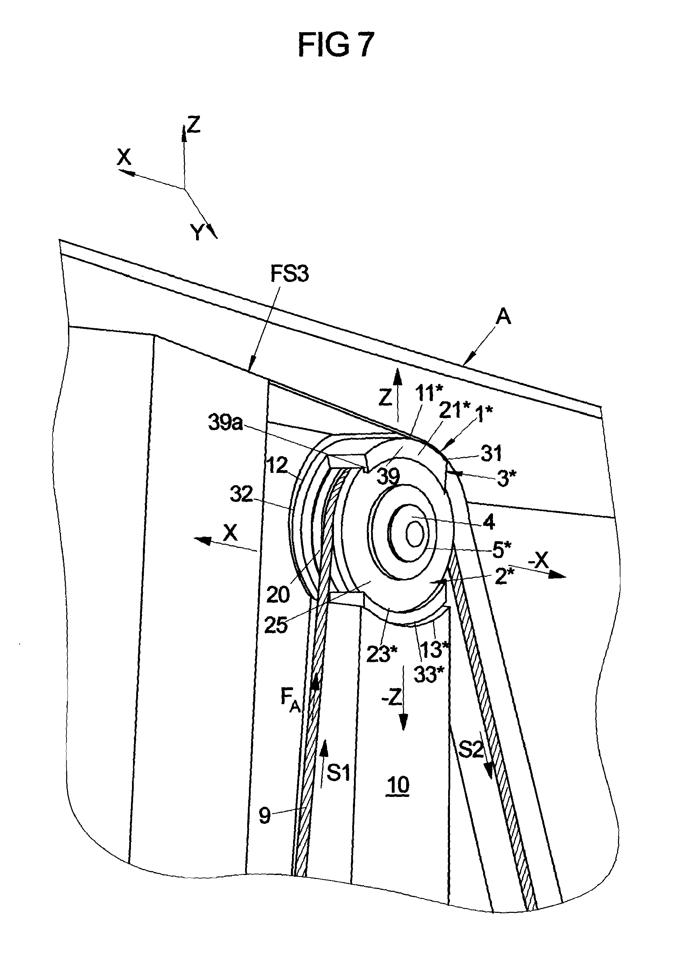

Mit der Fig. 7 wird eine alternative Ausführungsform einer Lagerstelle 1* gezeigt. Übereinstimmend wird auch hier zunächst die Lagerstelle 1* für eine Seilrolle 2* an einer sich an dem Aggregateträger A erstreckenden Führungsschiene FS3 vorgesehen. Im Gegensatz zu den vorherigen Ausführungen wird die Lagerstelle 1* aber nun von der Führungsschiene FS3 abschnittsweise "umschlossen". Das heißt, dass die die Führungsschiene FS3 nach oben, also quer zu ihrer Erstreckungsrichtung, begrenzende Abschlusskante 7a gleichzeitig eine radiale Abstützung der Seilrolle 2* bildet. Die Abschlusskante 7a bildet hierzu den parallel zur der Drehachse bzw. Verbindungsachse Y vorstehenden Stützabschnitt 11* respektive einen Stützbereich aus, der die Seilrolle 2* mittels eines alternativ ausgeführten Basiselementes 3* in einem Bereich 21* ihres äußeren Umfangs wenigstens in Richtung Z senkrecht zu der Verbindungsachse Y abstützt. Die Z-Richtung ist in der Fig. 7 ebenfalls die Erstreckungsrichtung der Führungsschiene FS3.

Weiterhin bildet die Führungsschiene FS3 gegenüberliegend zu dem Stützabschnitt 11* ebenso einen weiteren die Seilrolle 2* abstützenden Lagerstellenabschnitt 13* aus. Dieser gleichermaßen vorstehenden Stützabschnitt 13* der Lagerstelle 1* stützt die Seilrolle 2* in einem Bereich 23* an der Außenseite respektive dem Umfang der Seilrolle 2* ab, der dem Bereich 21* gegenüberliegt.

Die beiden Abschnitte 11* und 13* bilden jeweils gewölbte, der Kreiskontur der Seilrolle 2* folgende Anlageflächen aus, die sich jeweils über die gesamte Dicke der Seilrolle 2* erstrecken. Mit anderen Worten die Anlageflächen der abstützenden Stützabschnitte 11* und 13* erstrecken sich ebenso wie die Stützabschnitte 11 und 13 der Fig. 1-4 axial (in Richtung der Verbindungsachse Y) mindestens bis zu einer dem Aggregateträger A abgewandten Oberseite 25 der Seilrolle 2* bzw. 2. Aufgrund der Tatsache, dass die Stützabschnitte 11 * und 13* jeweils wenigstens ein Viertel des Umfangs der Seilrolle 2* überdecken, ist über sie auch eine Abstützung gegen Kraftkomponenten gegeben, die in Richtung X und -X senkrecht zu der Verbindungsachse Y und senkrecht zu der Erstreckung Z bzw. -Z der Führungsschiene FS3 wirken.

In dem gezeigten Ausführungsbeispiel der Fig. 7 schließen sich an den abstützenden "inneren" Stützabschnitt 13* keine Verstärkungsrippen sondern eine Stützstruktur 10 an. Diese Stützstruktur 10 ist vorzugsweise ein sich von der Anlagefläche des Stützabschnitts 13* aus erstreckendes angeformtes Hohlprofil. Vorliegend erstreckt sich dieses in Richtung -Z. Auf diese Weise wird eine Kraft auf den Stützabschnitt 13* gezielt in die Führungsschiene FS3 ein- bzw. weitergeleitet und die mittig in die Seilrolle 2* eingeführte Schraube 4 dient erneut nur der axialen Sicherung der Seilrolle 2* in Richtung der Verbindungsachse Y. Zur verbesserten Funktionsintegration kann die Stützstruktur 10 Teil einer Laufbahn der Führungsschiene FS3 sein, entlang derer ein Mitnehmer verschiebbar ist, um eine mit dem Mitnehmer verbundene Fensterscheibe zu verstellen (nicht dargestellt).

Auf diese Weise ist eine effektive Aufnahme der Kräfte möglich, die im Wesentlichen über einen in der Nut 20 der Seilrolle 2* geführten Seilzug 9 auf die Seilrolle 2* wirken. Zur Übertragung der Antriebskraft F_{A} von einem Antrieb auf eine zu verstellende Fensterscheibe (nicht dargestellt) lenkt die Seilrolle 2* je nach Drehrichtung den Seilzug 9 respektive die Antriebskraft F_{A} von einer Wirkrichtung S2 in eine andere Wirkrichtung S1 oder umgekehrt um. In der gezeigten Darstellung würde ein Abschnitt der Fensterscheibe oder ein mit ihr verbundener Mitnehmer mittels des Seilzuges 9 in S1-Richtung bewegt, indem die in S2-Richtung wirkende Antriebskraft F_{A} über die Seilrolle 2* umlenkt wird.

Da, wie in der Fig. 7 gezeigt, die eine Wirkrichtung S1 nahezu parallel zur Erstreckungsrichtung Z verläuft und die andere Wirkrichtung S2 nur Komponenten in Richtung -X und -Z enthält, gewährleistet die Abstützung der Seilrolle 2* durch die Stützabschnitte 11* und 13* auch eine stabile Aufnahme der dadurch in diese Richtungen auf die Seilrolle 2* wirkenden Kräfte. Alternativ kann für die separate Abstützung in die jeweiligen (Höchstbelastungs-)Richtungen S1, S2 und -Z auch jeweils ein separater Stützabschnitt vorgesehen sein.

Weiterhin ist in der Fig. 7 eine alternative Ausführungsform eines Basiselementes 3* gezeigt, das hier mit zwei von der Basisfläche 32 vorstehenden Abschnitten 31 und 33* zwischen der Seilrolle 2* und den Stützabschnitten 11* und 13* angeordnet ist. Vorliegend bilden daher die Abschnitte 31 und 33* eine Seil(zug)sicherung aus, indem sie die an der Seilrolle 2* umlaufende Nut 20 zur Führung des Seilzugs 9 in einem Abstand überdecken, der die Dicke des Seilzuges 9 nicht übersteigt. Der Seilzug kann daher nach der Montage nicht mehr unkontrolliert aus der Nut 20 springen.

Darüber hinaus weist der Abschnitt 31 des Basiselementes 3* einen sich radial zur Mitte der Seilrolle 2* hin erstreckenden (schmalen) Rand oder Vorsprung 39 auf. Dieser bildet eine der Oberseite 25 der Seilrolle 2* zugewandte Anschlagfläche 39a aus, die verhindert, dass die Seilrolle 2* durch eine senkrecht zur Antriebskraft F_{A}, z.B. parallel zur Y-Richtung, wirkende Kraftkomponente verkippt wird. Es wird also ein Verkippen der Seilrolle 2* um eine Achse senkrecht zur Drehachse bzw. Verbindungsachse Y verhindert oder zumindest nur in einem Maß zugelassen, welches sich nach dem Abstand der Oberseite 25 zu der Anschlagfläche 39a des Vorsprung 39 richtet. Dabei ist der angeformte Vorsprung 39 entsprechend schmal gestaltet, so dass die Seilrolle 2* zur Befestigung noch schräg in das Basiselement 3* eingebracht werden kann.

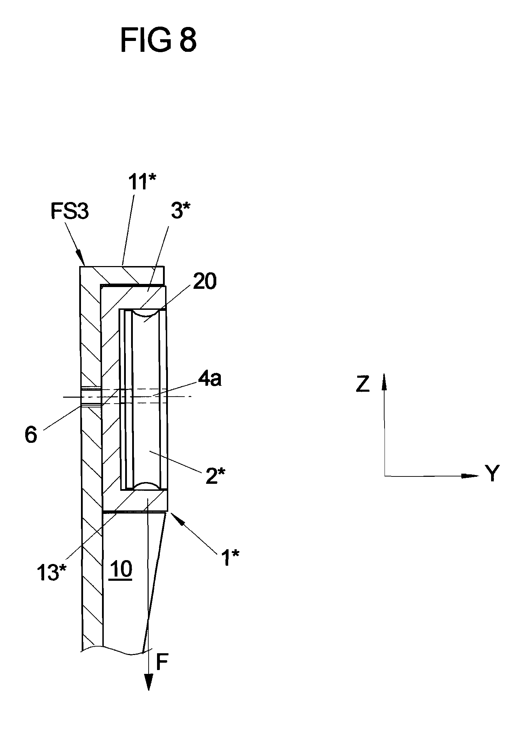

Die Fig. 8 zeigt in geschnittener Seitenansicht das vorangegangene Ausführungsbeispiel ohne den Vorsprung 39 am Basiselement 3*. Eine Befestigungsbohrung 6 an der Führungsschiene FS3 für die Schraube 4 ist hier nur schematisch gezeigt. Demgegenüber ist in der Fig. 8 zu erkennen, dass die angeformte Stützstruktur 10 von der Seilrolle 2* bzw. von dem Stützabschnitt 13 aus konisch in Richtung -Z zuläuft und damit einen an den Kraftfluss angepasste Formgebung aufweist. Wie in Zusammenschau mit Fig. 7 ersichtlich ist, wirkt in Richtung -Z stets eine resultierende Kraft F infolge der Umlenkung der Antriebskraft Fₐ auf die Seilrolle 2* bzw. die Schraube 4 ein. Die auf die Seilrolle 2* wirkende Kraft(komponente) F in Richtung -Z führt bei einer ausschließlich mittigen Abstützung der Seilrolle 2* über die Schraube 4 daher zu einem hohen Biegemoment, das z.B. über einen entsprechend massiven Kunststoffdom aufgenommen werden muss. Durch die Stützabschnitte 11* und 13* wird demgegenüber die hierfür verantwortliche resultierende Kraft F direkt am Umfang der Seilrolle 2* aufgenommen. Über die Stützstruktur 10 wird die Kraft F von den Stützabschnitten 11* und 13* in die Führungsscheine FS3 eingeleitet. Durch den konischen Verlauf der Stützstruktur 10 erfolgt eine möglichst optimale Krafteinleitung und Kraftverteilung in der Führungsschiene FS3.

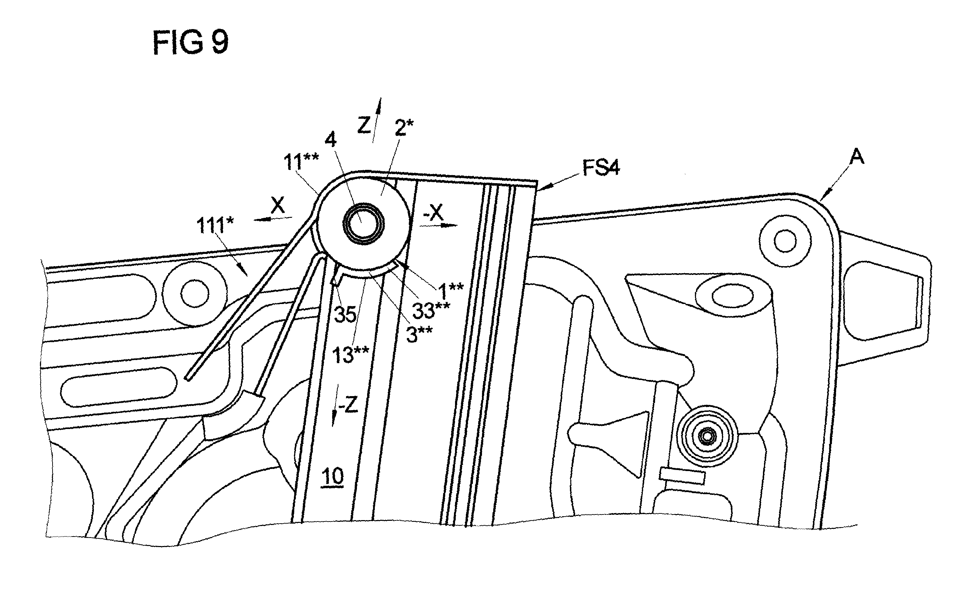

Mit der Fig. 9 wird eine Führungsschiene FS4 gezeigt, die ebenfalls über eine Lagerstelle 1** mit übereinstimmend angeordneten Stützabschnitten 11** und 13** und einer Stützstruktur 10 verfügt. Alternativ ausgeführt sind hier vor allem der sich an den Stützabschnitt 11** und den Stützabschnitt 13** anschließende Bereich 111* für eine Seilzugführung. Der Bereich 111* für die Seilzugführung ist hierfür durch zwei schmale Stege begrenzt, die im Wesentlichen einen V-förmigen Bereich definieren, der zu der Seilrolle 2* hin enger wird. Gerade bei einer Fertigung der Führungsschiene FS4 aus Kunststoff sind diese Stege als Fortsätze der Stützabschnitte 11** und 13** in kostengünstiger Weise angeformt herzustellen und erlauben eine definiertere Zuführung eines Seilzuges an die Seilrolle 2*.

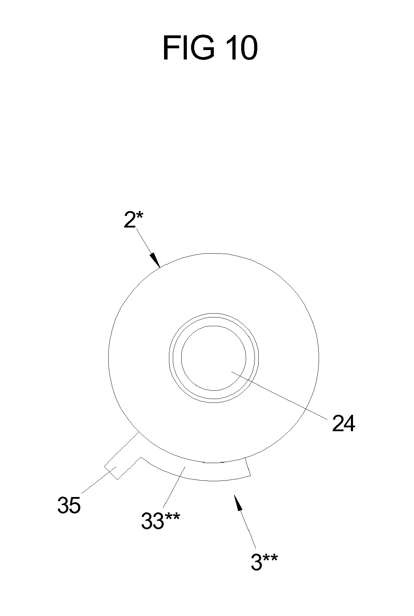

Des Weiteren ist in der Fig. 9 in Zusammenschau mit der Fig. 10 auch eine alternative Ausführungsform des in der Lagerstelle 1** eingebauten Basiselementes 3** gezeigt. Das Basiselement 3** weist nur einen von der Basisfläche 32 vorstehenden Abschnitt 33** auf. Der vorstehende Abschnitt 33** ist zwischen der Stützstruktur 10 der Lagerstelle 1** und einem Umfangsbereich der Seilrolle 2* angeordnet, um die Seilrolle 2* im Wesentlichen in Richtung -Z abzustützen. Um das Mitdrehen des Basiselementes 3** mit der drehbar gelagerten Seilrolle 2* in einfacher Weise zu verhindern, weist das Basiselement 3** als Verdrehsicherung einen angeformten Steg 35 auf. Dieser Steg 35 erstreckt sich im Wesentlichen senkrecht zur Drehachse der Seilrolle 2* (radial zur Seilrolle 2*) an dem Basiselement 3** bzw. an dem Abschnitt 33** des Basiselementes 3** und ist im Bereich der Lagerstelle 1** fixiert. Wie in der Fig. 9 dargestellt, wird der Steg 35 in einer Aussparung der Stützstruktur 10 formschlüssig aufgenommen.

Im Gegensatz zu den dargestellten Ausführungsvarianten ist auch die direkte Anlage der Bereiche 21, 23 bzw. 21*, 23* der Seilrolle 2 bzw. 2* an einem Basiselement 3 bzw. 3* oder an den Stützabschnitten der Lagerstelle möglich. Hierfür könnten die entsprechenden Bereiche im Sinne die Seilrolle radial abstützender Gleitlagerabschnitte ausgebildet sein. Eine reibungsarme Drehung der Seilrolle würde somit gestattet, obwohl Bereiche der Seilrolle an den abstützenden Abschnitten "anliegen".

Obwohl in den vorgegangenen Ausführungsbeispielen jeweils eine Seilrolle 2 bzw. 2* als Umlenkelement dargestellt wurde, kann selbstverständlich auch ein alternatives Umlenkelement vorgesehen sein, das üblicherweise in einer Fensterheberbaugruppe einer Kraftfahrzeugtür eingesetzt wird. Dabei kann es sich z.B. auch um ein (starres) Umlenkstück bzw. einen Umlenkgleiter handeln, durch den ein Seilzug geführt ist. Bei einem solchen unbeweglich fixierten Umlenkelement liegen dann bevorzugt Bereiche des Umlenkstücks senkrecht zur Verbindungsachse direkt an den erläuterten Stützabschnitten der Lagerstelle und des Basiselementes an.

Ebenso ist es möglich, die genannten Bauelemente (Führungsschiene, Aggregateträger, Lagerstelle, Basiselement, Seilrolle, etc.) aus verschiedenen oder gleichen Materialien, wie Kunststoff oder einem Metall, herzustellen und die gezeigten Ausführungsvarianten untereinander zu kombinieren.

### Bezugszeichenliste

- 1a, 1b, 1*, 1**: Lagerstelle
- 10: Stützstruktur, Laufbahn der Führungsschiene
- 11, 11*, 1**: Vorstehender Stützabschnitt der Lagerstelle (außen)
- 111*: Bereich für Seilzug-/ Bowdenzugführung
- 12: Anlagefläche der Lagerstelle
- 13, 13*, 13**: Vorstehender Stützabschnitt der Lagerstelle (innen)
- 14: Lagerzapfen
- 130, 130a: Verstärkungsrippen
- 19: Seilzug-/Bowdenzugabstützung
- 2, 2*: Seilrolle
- 20: Umlaufende Nut
- 21, 21*: Äußere Abschnitt der Seilrolle
- 22: Innenfläche der Bohrung
- 23, 23*: Äußerer Abschnitt der Seilrolle
- 24: Bohrung
- 25: Oberseite der Seilrolle
- 26: Umlaufende Aussparung
- 3, 3*, 3**: Basiselement (Fassung/Lagerbuchse)
- 31: Stützabschnitt des Basiselementes (außen)
- 31 a: Aussparung / Ausnehmung
- 311: Bereich für Seilzug-/ Bowdenzugführung am Basiselement
- 32: Unterseite des Basiselementes
- 33, 33*, 33**: Stützabschnitt des Basiselementes (innen)
- 33a: Fortsatz des Stützabschnitts
- 34: Lagerzapfen, Durchzug am Basiselement
- 35: Verdrehsicherung
- 36: Ringwulst
- 39: Vorsprung
- 39a: Anschlagfläche am Vorsprung 39
- 4, 4a: Verbindungselement (Schraube/Bolzen/Niete)
- 5: Unterlegscheibe
- 6: Befestigungsbohrung
- 7a, 7b: Abschlusskante der Führungsschiene
- 9: Seilzug
- A: Aggregateträger
- B: Befestigungsstelle
- D: Dichtung
- F: Kraftkomponente
- F_{A}: Antriebskraft
- FS1, FS2, FS3, FS4: Führungsschiene
- L: Lautsprecheröffnung
- S: Bereich für Anbringung eines Türschlosses
- S1, S2: Wirkrichtung des Seilzuges
- X, -X, Y, -Y, Z, -Z: Raumrichtung

## Patentansprüche

1. Fensterheberbaugruppe für ein Kraftfahrzeug, mit einem Bauteil (A, FS1, FS2, FS3, FS4), an dem eine Lagerstelle (1a, 1b, 1*, 1**) für ein Umlenkelement (2, 2*) der Fensterheberbaugruppe, insbesondere für eine Seilrolle oder ein Umlenkstück, vorgesehen ist,
- wobei das Umlenkelement (2, 2*) an der Lagerstelle (1a, 1b, 1*, 1**) entlang einer von dem Umlenkelement (2, 2*) zu dem Bauteil (A, FS1, FS2, FS3, FS4) weisenden Verbindungsachse (Y) an dem Bauteil angeordnet ist und das Umlenkelement (2, 2*) eine Antriebskraft (F_{A}) zum Verstellen einer Fensterscheibe des Kraftfahrzeugs umlenkt,
- wobei die Lagerstelle (1a, 1b, 1*, 1**) das Umlenkelement (2, 2*) an einer das Umlenkelement (2, 2*) berandenden Außenseite (21, 21*, 23, 23*) zumindest in einer Richtung (S1, S2, X, -X, Z, -Z) senkrecht zu der Verbindungsachse (Y) abstützt und die Lagerstelle (1a, 1 b, 1*, 1**) zur Abstützung des Umlenkelementes (2, 2*) wenigstens einen vom dem Bauteil vorstehenden Abschnitt (11, 11*, 13, 13*) aufweist, und
- mit einem separat an die Lagerstelle (1a, 1b, 1*, 1**) montierbaren Basiselement (3, 3*, 3**), das mit wenigstens einem Abschnitt (31, 33, 33*, 33**) zwischen dem Umlenkelement (2, 2*) und dem vorstehenden Abschnitt (11, 11*, 13, 13*) der Lagerstelle (1 a, 1 b, 1*, 1**) angeordnet ist,
**dadurch gekennzeichnet, dass**
- sich das Umlenkelement (2, 2*) über das Basiselement (3, 3*, 3**) senkrecht zu der Verbindungsachse (Y) an der Lagerstelle (1a, 1 b, 1*, 1**) abstützt, so dass Kräfte, die durch die Umlenkung der Antriebskraft (F_{A}) auf das Umlenkelement (2, 2*) wirken, von dem Basiselement (3, 3*, 3**) auf den vorstehenden Abschnitt (11, 11*, 13, 13*) übertragen werden, und
- das Umlenkelement (2, 2*) entlang einer Anbringungsrichtung (-Y), die entlang der Verbindungsachse (Y) an dem Bauteil (A, FS1 , FS2, FS3, FS4) r verläuft, angebracht wird, wobei die Verbindungsachse (Y) eine körperliche Achse für die Lagerung des Umlenkelements (2, 2*) bildet.

2. Fensterheberbaugruppe nach Anspruch 1, **dadurch gekennzeichnet, dass** die Lagerstelle (1a, 1b, 1*, 1**) das Umlenkelement (2, 2*) wenigstens in eine Richtung (-Z) abstützt, in die infolge der Umlenkung der Antriebskraft (Fa) eine resultierende Kraft (F) auf das Umlenkelement (2, 2*) wirkt und/oder dass die Lagerstelle (1a, 1b, 1*, 1**) als eine Aufnahme ausgebildet ist, die den vorstehenden Abschnitt (11, 11*, 13, 13*) aufweist und die das Umlenkelement (2, 2*) wenigstens abschnittsweise umgibt.

3. Fensterheberbaugruppe nach einem der vorangegangenen Ansprüche, **dadurch gekennzeichnet, dass** sich eine Stützstruktur (10) von einer Anlagefläche, die die Lagerstelle (1 a, 1b, 1*, 1**) an dem wenigstens einen vorstehenden Abschnitt (11, 11*, 13, 13*) ausbildet und an der das Umlenkelement (2, 2*) abgestützt ist, oder von dem wenigstens einen vorstehenden Abschnitt (11, 11*, 13, 13*) aus in eine Richtung (-Z) erstreckt, die von dem Umlenkelement (2, 2*) weg weist, und/oder dass die Lagerstelle (1a, 1b) wenigstens eine Verstärkungsrippe (130, 130a) aufweist.

4. Fensterheberbaugruppe nach Anspruch 3, **dadurch gekennzeichnet, dass** die Stützstruktur (10) von der Anlagefläche (13*) oder dem vorstehenden Abschnitt (11, 11*, 13, 13*) aus konisch zuläuft und/oder die Stützstruktur (10) der Lagerstelle (1*, 1**) Teil einer Laufbahn einer Führungsschiene (FS3) ist, entlang derer ein Mitnehmer verschiebbar ist, um eine mit dem Mitnehmer verbundene Fensterscheibe zu verstellen.

5. Fensterheberbaugruppe nach Anspruch 3 oder 4, **dadurch gekennzeichnet, dass** bei einer wenigstens eine Verstärkungsrippe (130, 130a) aufweisenden Lagerstelle (1a, 1b) die Verstärkungsrippe (130, 130a) an dem wenigstens einen vorstehenden Abschnitt (11, 13) angeformt ist und/oder dass sich die Verstärkungsrippe (130, 130a) oder eine Mehrzahl von Verstärkungsrippen (130, 130a) in eine Wirkrichtung (S1, S2) der Antriebskraft (F_{A}) erstreckt.

6. Fensterheberbaugruppe nach einem der vorangegangenen Ansprüche, **dadurch gekennzeichnet, dass** die Lagerstelle (1a, 1b, 1*, 1**) das Umlenkelement (2, 2*) und/oder das Basiselement (3, 3*, 3**) derart abstützt, dass die Lagerstelle (1 a, 1 b, 1*, 1**) ein Verkippen des Umlenkelements (2, 2*) und/oder des Basiselementes (3, 3*, 3**) in eine Richtung parallel zur Verbindungsachse (Y) begrenzt oder verhindert; und/oder dass ein das Umlenkelement (2, 2*) umgreifender Abschnitt (31) des Basiselementes (3, 3*, 3**) eine Anschlagfläche (39) aufweist, die das Verkippen des Umlenkelementes (2, 2*) durch eine senkrecht zur Antriebskraft (F_{A}) wirkende Kraftkomponente begrenzt oder verhindert.

7. Fensterheberbaugruppe nach Anspruch 6, **dadurch gekennzeichnet, dass** der mindestens eine vorstehende Abschnitt (11, 11*, 13, 13*) der Lagerstelle (1 a, 1 b, 1*, 1**) das Umlenkelement (2, 2*) und/oder das Basiselement (3, 3*, 3**) umgreift.

8. Fensterheberbaugruppe nach den Ansprüchen 6 und 7, **dadurch gekennzeichnet, dass** der das Umlenkelement (2, 2*) und/oder das Basiselement (3, 3*, 3**) umgreifende Abschnitt (11) der Lagerstelle (1 a, 1 b, 1*, 1**) eine Anschlagfläche aufweist, die verhindert, dass das Umlenkelement (2, 2*) durch eine senkrecht zur Antriebskraft (F_{A}) wirkende Kraftkomponente verkippt wird.

9. Fensterheberbaugruppe nach einem der vorangegangenen Ansprüche, **dadurch gekennzeichnet, dass** das Umlenkelement (2, 2*) mit dem Basiselement (3, 3*, 3**) vormontierbar ist, so dass das Basiselement (3, 3*, 3**) zusammen mit dem Umlenkelement (2, 2*) an der Lagerstelle (1 a, 1 b, 1*, 1**) angebracht ist.

10. Fensterheberbaugruppe nach einem der vorangegangenen Ansprüche, **dadurch gekennzeichnet, dass** das Basiselement (3, 3*, 3**) eine Verdrehsicherung (31a, 33a, 35) aufweist, mittels derer bei einem zur Umlenkung der Antriebskraft (F_{A}) drehbar gelagertem Umlenkelement (2, 2*) verhindert wird, dass das Basiselement (3, 3*, 3**) bei einer Drehung des Umlenkelementes (2, 2*) mitbewegt wird.

11. Fensterheberbaugruppe nach Anspruch 10, **dadurch gekennzeichnet, dass** das Basiselement (3, 3*, 3**) als Verdrehsicherung (35) einen angeformten Steg aufweist, der sich im Wesentlichen senkrecht zu einer Drehachse des Umlenkelementes (2, 2*) an dem Basiselement (3, 3*, 3**) erstreckt und der im Bereich der Lagerstelle (1a, 1 b, 1*, 1**) fixiert ist.

12. Fensterheberbaugruppe nach einem der vorangegangenen Ansprüche, **dadurch gekennzeichnet, dass** das Umlenkelement (2, 2*) einen Seilzug (9) als flexibles Zugmittel umlenkt, über das die Antriebskraft (F_{A}) wirkt, und die Lagerstelle (1 a, 1 b, 1*, 1**) eine Seilzugabstützung (19, 111*) aufweist, die den Seilzug (9) zu dem Umlenkelement (2, 2*) hin oder von dem Umlenkelement (2, 2*) weg führt.

13. Fensterheberbaugruppe nach Anspruch 12, **dadurch gekennzeichnet, dass** die Seilzugabstützung (19) an einem dafür vorgesehenen Bereich (311) der Lagerstelle (1a, 1 b) aufsteckbar ist.

14. Fensterheberbaugruppe nach einem der vorangegangenen Ansprüche, **dadurch gekennzeichnet, dass** die Lagerstelle (1a) einen vorstehenden hohlen Befestigungszapfen (14) aufweist und das Basiselement (3) einen Durchzug (34) zur Lagerung des Umlenkelements (2, 2*) aufweist, der über den Befestigungszapfen (14) gestülpt ist, und dass ein Befestigungselement (4) mit dem hohlen Befestigungszapfen (14) verbunden ist, so dass das Umlenkelement (2, 2*) und das Basiselement (3) durch das Befestigungselement (4) in Richtung der Verbindungsachse (Y) arretiert sind.

15. Fensterheberbaugruppe nach einem der vorangegangenen Ansprüche, **dadurch gekennzeichnet, dass** das Bauteil, an dem die Lagerstelle (1a, 1b, 1*, 1**) und das Basiselement (3, 3*, 3**) vorgesehen sind, eine Führungsschiene (FS1, FS2) der Fensterheberbaugruppe ist, insbesondere eine an einem Aggregateträger (A) einer Kraftfahrzeugtür angeformte Führungsschiene (FS1, FS2).

## Claims

1. A window lift assembly for a motor vehicle, with a component (A, FS1, FS2, FS3, FS4) on which a bearing site (1 a, 1 b, 1*, 1**) is provided for a redirecting element (2, 2*) of the window lift assembly, in particular for a cable pulley or a deflecting piece, is provided
- wherein the redirecting element (2, 2*) is arranged at the bearing site (1 a, 1 b, 1*, 1**) on the component along a connecting axis (Y) pointing from the redirecting element (2, 2*) to the component (A, FS1, FS2, FS3, FS4) and the redirecting element (2, 2*) redirects a driving force (FA) for adjusting a window pane of the motor vehicle,
- wherein the bearing site (1 a, 1 b, 1*, 1**) supports the redirecting element (2, 2*) on an outer surface (21, 21*, 23, 23*) rimming the redirecting element (2, 2*) at least in a direction (S1, S2, X, -X, Z, -Z) vertical to the connecting axis (Y) and for supporting the redirecting element (2, 2*) the bearing site (1 a, 1 b, 1*, 1**) includes at least one portion (11, 11*, 13, 13*) protruding from the component (A, FS1, FS2, FS3, FS4), and
- comprising a base element (3, 3*, 3**) separately mountable to the bearing site (1a, 1b, 1*, 1**), which with at least one portion (31, 33, 33*, 33**) is arranged between the redirecting element (2, 2*) and the protruding portion (11, 11*, 13, 13*) of the bearing site (1 a, 1 b, 1*, 1**), and
**characterized in that**
- the redirecting element (2, 2*) supports via the base element (3, 3*, 3**) on the bearing site (1a, 1b, 1*, 1**) vertical to the connecting axis (Y), so that forces acting on the redirecting element (2, 2*) due to the redirection of the driving force (F_{A}) are transmitted from the base element (3, 3*, 3**) to the protruding portion (11, 11*, 13, 13*), and
- the redirecting element (2, 2*) is mounted along a mounting direction (-Y) which runs along the connecting axis (Y) on the component (A, FS1, FS2, FS3, FS4), wherein the connecting axis (Y) forms a physical axis for mounting the redirecting element (2, 2*).

2. The window lift assembly according to claim 1, **characterized in that** the bearing site (1a, 1b, 1*, 1**) supports the redirecting element (2, 2*) at least in a direction (-Z), in which a resultant force (F) acts on the redirecting element (2, 2*) due to the redirection of the driving force (F_{A}) and /or the bearing site (1 a, 1 b, 1*, 1**) is formed as receptacle which comprises the at least one protruding portion (11, 11*, 13, 13*) and which at least partly surrounds the redirecting element (2, 2*).

3. The window lift assembly according to any of the preceding of claims, **characterized in that** a supporting structure (10) extends from the abutment surface which the bearing site (1 a, 1 b, 1*, 1**) forms on the at least one protruding portion (11, 11*, 13, 13*) and on which the redirecting element (2, 2*) is supported or from the at least one protruding portion (11, 11*, 13, 13*) in a direction (-Z) which points away from the redirecting element (2, 2*), and/or that the bearing site (1 a, 1 b) comprises a reinforcing rib (130, 130a).

4. The window lift assembly according to claim 3, **characterized in that** the supporting structure (10) conically tapers from the abutment surface (13*) or the protruding portion (11, 11*, 13, 13*) and/or the supporting structure (10) of the bearing site (1*, 1**) is part of a track of a guide rail (FS3), along which a carrier can be shifted, in order to adjust a window pane connected with the carrier.

5. The window lift assembly according to claim 3 or 4, **characterized in that** on the bearing site (1a, 1b) which comprises at least one reinforcing rib (130, 130a) the reinforcing rib (130, 130a) is molded to the at least one protruding portion (11, 13) and/or the reinforcing rib (130, 130a) or a plurality of reinforcing ribs (130, 130a) extends in a direction of action (S1, S2) of the driving force (F_{A}).

6. The window lift assembly according to any of the preceding claims, **characterized in that** the bearing site (1 a, 1 b, 1*, 1**) supports the redirecting element (2, 2*) and/or the base element (3, 3*, 3**) such that the bearing site (1 a, 1 b, 1*, 1**) limits or prevents tilting of the redirecting element (2, 2*) and/or of the base element (3, 3*, 3**) in a direction parallel to the connecting axis (Y), and/or a portion (31) of the base element (3, 3*, 3**) enclosing the redirecting element (2, 2*) includes a stop surface (39) which limits or prevents tilting of the redirecting element (2, 2*) by a force component acting vertical to the driving force (FA).

7. The window lift assembly according to claim 6, **characterized in that** the at least one protruding portion (11, 11*, 13, 13*) of the bearing site (1 a, 1 b, 1*, 1**) encloses the redirecting element (2, 2*) and/or the base element (3, 3*, 3**).

8. The window lift assembly according to claim 6 and 7, **characterized in that** the portion (11) of the bearing site (1 a, 1 b, 1*, 1**) enclosing the redirecting element (2, 2*) and/or the base element (3, 3*, 3**) includes a stop surface which prevents the redirecting element (2, 2*) from being tilted by a force component acting vertical to the driving force (F_{A}).

9. The window lift assembly according to any of the preceding claims, **characterized in that** the redirecting element (2, 2*) and the base element (3, 3*, 3**) are pre-mountable, such that the base element (3, 3*, 3**) is mounted at the bearing site (1 a, 1 b, 1*, 1**) together with the redirecting element (2, 2*).

10. The window lift assembly according to any of the preceding claims, **characterized in that** the base element (3, 3*, 3**) includes an anti-rotation device (31 a, 33a, 35), by means of which it is prevented in a redirecting element (2, 2*) rotatably mounted for redirecting the driving force (F_{A}) that the base element (3, 3*, 3**) is rotated along with a rotation of the redirecting element (2, 2*).

11. The window lift assembly according to claim 10, **characterized in that** the base element (3, 3*, 3**) includes an integrally molded web as anti-rotation device (35), which extends at the base element (3, 3*, 3**) substantially vertical to an axis of rotation of the redirecting element (2, 2*) and which is fixed in the region of the bearing site (1a, 1b, 1*, 1**).

12. The window lift assembly according to any of the preceding claims, **characterized in that** the redirecting element (2, 2*) redirects a Bowden cable (9) as a flexible pulling means, via which the driving force (F_{A}) acts, and the bearing site (1a, 1b, 1*, 1**) includes a Bowden cable support (19, 111*) which guides the Bowden cable (9) towards the redirecting element (2, 2*) or away from the redirecting element (2,, 2*).

13. The window lift assembly according to claim 12, **characterized in that** the Bowden cable support (19) can be attached to a region (311) of the bearing site (1 a, 1 b) which is provided for this purpose.

14. The window lift assembly according to any of the preceding claims, **characterized in that** the bearing site (1a) includes a protruding hollow fastening pin (14) and a base element (3) separately mountable to the bearing site (1a) is provided, which includes an eyelet (34) for mounting the redirecting element (2, 2*), wherein the eyelet (34) is put over the fastening pin (14) and a fastening element (4) is connected with the hollow fastening pin (14), so that the redirecting element (2, 2*) and the base element (3) are locked by the fastening element (4) in direction of the connecting axis (Y)

15. The window lift assembly according to any of the preceding claims, **characterized in that** the component on which a bearing site (1a, 1b, 1*, 1 **) and the base element (3, 3*, 3**) are provided is a guide rail (FS1, FS2) as component of a window lift assembly, particularly a guide rail (FS1, FS2) which is formed on an assembly carrier (A) of a motor vehicle door.

## Revendications

1. Ensemble de lève-vitre pour un véhicule automobile, avec un composant (A, FS1, FS2, FS3, FS4), sur lequel est prévu un point d'appui (1a, 1b, 1*, 1**) pour un élément de renvoi (2, 2*) de l'ensemble de lève-vitre, en particulier pour une poulie ou une pièce de renvoi,
- l'élément de renvoi (2, 2*) étant agencé sur le point d'appui (1a, 1b, 1*, 1**) le long d'un axe de liaison (Y) dirigé de l'élément de renvoi (2, 2*) au composant (A, FS1, FS2, FS3, FS4) sur le composant et l'élément de renvoi (2, 2*) renvoyant une force d'entraînement (F_{A}) pour le réglage d'une vitre du véhicule automobile,
- le point d'appui (1a, 1b, 1*, 1**) soutenant l'élément de renvoi (2, 2*) sur un côté extérieur (21, 21*, 23, 23*) entourant l'élément de renvoi (2, 2*) au moins dans une direction (S1, S2, X, -X, Z, -Z) perpendiculairement à l'axe de liaison (Y) et le point d'appui (1a, 1b, 1*, 1**) présentant pour l'appui de l'élément de renvoi (2, 2*) au moins une section (11, 11*, 13, 13*) dépassant du composant, et
- avec un élément de base (3, 3*, 3**) pouvant être monté séparément sur le point d'appui (1a, 1b, 1*, 1**), qui est agencé avec au moins une section (31, 33, 33*, 33**) entre l'élément de renvoi (2, 2*) et la section en saillie (11, 11*, 13, 13*) du point d'appui (1a, 1b, 1*, 1**),
**caractérisé en ce que**
- l'élément de renvoi (2, 2*) s'appuie sur l'élément de base (3, 3*, 3**) perpendiculairement à l'axe de liaison (Y) sur le point d'appui (1a, 1b, 1*, 1**) de sorte que des forces qui agissent par le renvoi de la force d'entraînement (F_{A}) sur l'élément de renvoi (2, 2*) soient transmises de l'élément de base (3, 3*, 3**) à la section en saillie (11, 11*, 13, 13*) et
- l'élément de renvoi (2, 2*) est monté le long d'un sens de montage (-Y) qui s'étend le long de l'axe de liaison (Y) sur le composant (A, FS1, FS2, FS3, FS4), l'axe de liaison (Y) formant un axe physique pour le logement de l'élément de renvoi (2, 2*).

2. Ensemble de lève-vitre selon la revendication 1, **caractérisé en ce que** le point d'appui (1a, 1b, 1*, 1**) soutient l'élément de renvoi (2, 2*) au moins dans une direction (-Z), dans laquelle à la suite du renvoi de la force d'entraînement (Fₐ), une force résultante (F) agit sur l'élément de renvoi (2, 2*) et/ou **en ce que** le point d'appui (1a, 1b, 1*, 1**) est réalisé comme un logement qui présente la section en saillie (11, 11*, 13, 13*) et qui entoure au moins par section l'élément de renvoi (2, 2*).

3. Ensemble de lève-vitre selon l'une quelconque des revendications précédentes, **caractérisé en ce qu'**une structure d'appui (10) s'étend depuis une surface d'installation qui réalise le point d'appui (1a, 1b, 1*, 1**) sur l'au moins une section en saillie (11, 11*, 13, 13*) et sur laquelle l'élément de renvoi (2, 2*) est en appui, ou de l'au moins une section en saillie (11, 11*, 13, 13*) dans une direction (-Z) qui est éloignée de l'élément de renvoi (2, 2*), et/ou **en ce que** le point d'appui (1a, 1b) présente au moins une nervure de renforcement (130, 130a).

4. Ensemble de lève-vitre selon la revendication 3, **caractérisé en ce que** la structure d'appui (10) se termine en cône depuis la surface d'installation (13*) ou la section en saillie (11, 11*, 13, 13*) et/ou la structure d'appui (10) du point d'appui (1*, 1**) fait partie d'une voie de roulement d'un rail de guidage (FS3), le long duquel un élément d'entraînement peut être déplacé afin de régler une vitre reliée à l'élément d' entraînement.

5. Ensemble de lève-vitre selon la revendication 3 ou 4, **caractérisé en ce que** pour un point d'appui (1a, 1b) présentant au moins une nervure de renforcement (130, 130a), la nervure de renforcement (130, 130a) est formée sur l'au moins une section en saillie (11, 13) et/ou **en ce que** la nervure de renforcement (130, 130a) ou une pluralité de nervures de renforcement (130, 130a) s'étend dans un sens d'action (S1, S2) de la force d'entraînement (F_{A}).

6. Ensemble de lève-vitre selon l'une quelconque des revendications précédentes, **caractérisé en ce que** le point d'appui (1a, 1b, 1*, 1**) soutenant l'élément de renvoi (2, 2*) et/ou l'élément de base (3, 3*, 3**) de telle manière que le point d'appui (1a, 1b, 1*, 1**) limite ou empêche un basculement de l'élément de renvoi (2, 2*) et/ou de l'élément de base (3, 3*, 3**) dans un sens parallèlement à l'axe de liaison (Y) ; et/ou **en ce qu'**une section (31) entourant l'élément de renvoi (2, 2*) de l'élément de base (3, 3*, 3**) présente une surface de butée (39) qui limite ou empêche le basculement de l'élément de renvoi (2, 2*) par une composante de force agissant perpendiculairement à la force d'entraînement (FA).

7. Ensemble de lève-vitre selon la revendication 6, **caractérisé en ce que** l'au moins une section en saillie (11, 11*, 13, 13*) du point d'appui (1a, 1b, 1*, 1**) entoure l'élément de renvoi (2, 2*) et/ou l'élément de base (3, 3*, 3**).

8. Ensemble de lève-vitre selon les revendications 6 et 7, **caractérisé en ce que** la section (11) entourant l'élément de renvoi (2, 2*) et/ou l'élément de base (3, 3*, 3**) du point d'appui (1a, 1b, 1*, 1**) présente une surface de butée qui empêche que l'élément de renvoi (2, 2*) ne soit basculé par une composante de force agissant perpendiculairement à la force d'entraînement (F_{A}).

9. Ensemble de lève-vitre selon l'une quelconque des revendications précédentes, **caractérisé en ce que** l'élément de renvoi (2, 2*) peut être prémonté avec l'élément de base (3, 3*, 3**) de sorte que l'élément de base (3, 3*, 3**) soit monté conjointement avec l'élément de renvoi (2, 2*) sur le point d'appui (1a, 1b, 1*, 1**).

10. Ensemble de lève-vitre selon l'une quelconque des revendications précédentes, **caractérisé en ce que** l'élément de base (3, 3*, 3**) présente une sécurité antitorsion (31a, 33a, 35), à l'aide de laquelle pour un élément de renvoi (2, 2*) logé de manière rotative pour le renvoi de la force d'entraînement (F_{A}), il est empêché que l'élément de base (3, 3*, 3**) soit déplacé lors d'une rotation de l'élément de renvoi (2, 2*).

11. Ensemble de lève-vitre selon la revendication 10, **caractérisé en ce que** l'élément de base (3, 3*, 3**) présente en guise de sécurité antitorsion (35) une nervure formée qui s'étend sensiblement perpendiculairement à un axe de rotation de l'élément de renvoi (2, 2*) sur l'élément de base (3, 3*, 3**) et qui est fixée dans la zone du point d'appui (1a, 1b, 1*, 1**).

12. Ensemble de lève-vitre selon l'une quelconque des revendications précédentes, **caractérisé en ce que** l'élément de renvoi (2, 2*) renvoie un câble Bowden (9) comme moyen de traction flexible, par lequel la force d'entraînement (F_{A}) agit, et le point d'appui (1a, 1b, 1*, 1**) présente un appui de câble Bowden (19, 111*) qui guide le câble Bowden (9) vers l'élément de renvoi (2, 2*) ou en éloignement de l'élément de renvoi (2, 2*).

13. Ensemble de lève-vitre selon la revendication 12, **caractérisé en ce que** l'appui de câble Bowden (19) peut être enfiché sur une zone (311) prévue à cet effet du point d'appui (1a, 1b).

14. Ensemble de lève-vitre selon l'une quelconque des revendications précédentes, **caractérisé en ce que** le point d'appui (1a) présente un tenon de fixation (14) creux en saillie et l'élément de base (3) présente un passage (34) pour le logement de l'élément de renvoi (2, 2*) qui est embouti par le tenon de fixation (14) et **en ce qu'**un élément de fixation (4) est relié au tenon de fixation (14) creux de sorte que l'élément de renvoi (2, 2*) et l'élément de base (3) soient bloqués par l'élément de fixation (4) en direction de l'axe de liaison (Y).

15. Ensemble de lève-vitre selon l'une quelconque des revendications précédentes, **caractérisé en ce que** le composant, sur lequel le point d'appui (1a, 1b, 1*, 1**) et l'élément de base (3, 3*, 3**) sont prévus, est un rail de guidage (FS1, FS2) de l'ensemble de lève-vitre, en particulier un rail de guidage (FS1, FS2) formé sur un support de groupe (A) d'une porte de véhicule automobile.
